# EUROPEAN PATENT APPLICATION

(11) **EP 4 624 996 A1**
(43) Date of publication of application: **01.10.2025**
(21) Application number: 22968940.1
(22) Date of filing: 22.12.2022
(51) Int. Cl.: G01S 17/88

(54) **TRANSMITTING APPARATUS, DETECTION APPARATUS, AND TERMINAL**

(71) Applicant: Shenzhen Yinwang Intelligent Technologies Co., Ltd., Shenzhen, Guangdong 518110 (CN)
(72) Inventor: XIAO, Xisheng, Shenzhen, Guangdong 518129 (CN); LIU, Jun, Shenzhen, Guangdong 518129 (CN); HUA, Kangjian, Shenzhen, Guangdong 518129 (CN)
(74) Representative: Gill Jennings & Every LLP
(86) International application number: PCT/CN2022/141024
(87) International publication number: WO 2024/130642

(57) **Abstract**

An emitting apparatus, a detection apparatus, and a terminal are provided, and may be used in fields such as detection, intelligent surveying and mapping, and intelligent driving. The emitting apparatus includes a first emitting module, a second emitting module, and a first light shaping module. The first emitting module and the second emitting module are disposed in parallel, and are separately configured to emit a light beam. The first light shaping module is configured to process a light beam from the first emitting module, to obtain a first shaped light beam. An FOV corresponding to the first shaped light beam in object space is greater than an FOV of a first light beam in the object space before the first light beam passes through the first light shaping module. Therefore, in embodiments of this application, an emitting visual field of the first emitting module is expanded, a visual blind spot of the detection apparatus is narrowed, and detection efficiency is improved. A second light beam is not processed by the first light shaping module, so that the second light beam can still maintain a good collimation degree, and a long-range detection capability is almost not affected. In conclusion, in embodiments of this application, a visual field of the detection apparatus is expanded without greatly reducing the long-range detection capability.

## Description

### TECHNICAL FIELD

This application relates to detection technologies, and in particular, to an emitting apparatus, a detection apparatus, and a terminal, and is used in fields such as intelligent driving, intelligent transportation, surveying and mapping, and intelligent manufacturing.

### BACKGROUND

With development of information technologies, detection technologies develop rapidly, and various detection apparatuses bring great convenience to people's life and travel. For example, an advanced driver assistance system (advanced driver assistance system, ADAS) plays a very important role in intelligent vehicles. The advanced driver assistance system uses a detection apparatus mounted on the vehicle to detect an ambient environment, collect data, identify static or moving objects, and the like in a traveling process of the vehicle and perform systematic calculation and analysis based on map data of a navigator, so that a driver is aware of potential hazards in advance, and driving comfort and safety of the vehicle are effectively improved. The detection apparatus may be considered as an "eye" for sensing environment, and includes a vision system sensor like a camera, and a radar system sensor like a millimeter-wave radar, a lidar, and an ultrasonic radar.

The lidar (light detection and ranging, Lidar, or referred to as a light detection and ranging apparatus) has advantages of high resolution, good detection performance, and strong concealment, and is one of important detection apparatuses in the sensing field. The lidar is a technology for emitting a detection signal and obtaining related information (for example, a feature quantity like a location, a shape, or a speed of a target) of the target by receiving an echo obtained through reflection by the target. A total output power of the lidar is limited, and a lidar with a strong long-range detection capability emits a laser beam with a high collimation degree. In this case, the lidar has a small visual field and low detection efficiency.

How to expand a visual field of the detection apparatus without greatly reducing a long-range detection capability is a problem to be urgently resolved by a person skilled in the art.

### SUMMARY

Embodiments of this application provide an emitting apparatus, a detection apparatus, and a terminal, to expand a visual field of the detection apparatus, narrow a visual blind spot of the detection apparatus, and improve detection efficiency.

According to a first aspect, an embodiment of this application provides an emitting apparatus. The emitting apparatus includes a first emitting module, a second emitting module, and a first light shaping element, and the first emitting module and the second emitting module are disposed in parallel;
the first emitting module is configured to emit a first light beam, and the second emitting module is configured to emit a second light beam; and
a partial light beam in the first light beam is reflected by the first light shaping element, to obtain a first shaped light beam.

In a possible implementation, the first light shaping element includes an incident surface, a side wall, and an emergent surface, the first light beam enters the first light shaping module from the incident surface, the partial light beam in the first light beam is reflected by the side wall, and the first light beam is emitted from the emergent surface to obtain the first shaped light beam.

In this embodiment of this application, a partial light beam in the first shaped light beam is reflected by the first light shaping module. Therefore, a transmission direction of the partial light beam is deflected. After passing through a lens, the partial light beam is deflected to an outside of an unreflected light beam, so that a field of view (field of view, FOV) of the first light beam is increased, and correspondingly, a visual field of the detection apparatus is also expanded.

Because the second light beam is not deflected, and may still maintain a good collimation degree when the second light beam arrives in the visual field, a long-range detection capability of the second light beam is almost not affected. The first emitting module and the second emitting module are disposed in parallel, and the first shaped light beam may detect a blind spot formed by the second light beam, to narrow a visual blind spot of the detection apparatus, and improve detection efficiency.

In a possible implementation of the first aspect, a longest detection range of the first light beam is less than a longest detection range of the second light beam.

In the foregoing implementation, the second light beam is applicable to long-range detection, and the first light beam is applicable to short-range detection. Therefore, the first light beam emitted by the first emitting module may detect a blind spot formed during long-range detection, to improve a short-range detection capability of the detection apparatus, and enhance detection performance of the detection apparatus.

In addition, because the first light beam is used for short-range detection, when the first light beam is shaped, an FOV of short-range detection by the emitting apparatus may be expanded, to implement short-range detection in a larger range, improve a blind spot compensation effect, and improve a short-range detection capability.

Optionally, energy density (or energy) of the first light beam is less than energy density (or energy) of the second light beam, and/or a power of the first light beam is less than a power of the second light beam.

In a possible implementation of the first aspect, the first emitting module and the second emitting module each include one or more emitters. The emitter may be an edge-emitting laser, a vertical surface emitting laser, or the like.

When the vertical surface emitter is disposed on a circuit board, an out-light surface is a surface parallel to the circuit board. Therefore, an out-light direction of the vertical surface emitter is a direction away from the circuit board. The vertical surface emitter includes but is not limited to a vertical cavity surface emitting laser (vertical cavity surface emitting laser, VCSEL), a photonic crystal surface emitting semiconductor laser (photonic crystal surface emitting semiconductor lasers, PCSEL), or the like.

When the edge-emitting laser (edge- emitting laser, EEL) is disposed on a circuit board, an out-light surface is a side of the laser. Therefore, an out-light direction of the edge-emitting laser is a direction parallel to the circuit board. Optionally, the EEL may alternatively be another apparatus that emits light at an edge of a light emitting component, for example, a silicon photonic chip.

In a possible implementation of the first aspect, the emitting apparatus further includes a lens, the first shaped light beam passes through the lens to obtain a third light beam, and the second light beam passes through the lens to obtain a fourth light beam. In this implementation, the first shaped light beam and the second light beam share a same lens, so that a volume of the emitting apparatus can be reduced, and hardware integration can be improved.

Optionally, a field of view of the third light beam is greater than a field of view of an original light beam. The "original light beam" described herein is a light beam obtained after the first light beam passes through the lens without being processed by the first light shaping module. That is, a visual field of a light beam emitted by the first emitting module in object space is increased by using the first light shaping module, the visual field of the detection apparatus is also correspondingly increased, and the blind spot is correspondingly reduced, thereby improving detection efficiency of the detection apparatus.

Further, the field of view includes a field of view in a first direction. The first emitting module and the second emitting module are arranged in the first direction, and there is a gap between the first emitting module and the second emitting module in the first direction.

In a possible implementation of the first aspect, the partial light beam includes a first sub-light beam, and the first sub-light beam is reflected by a side wall that is of the first light shaping module and that is close to the second emitting module.

In this implementation, the first sub-light beam is deflected away from the second emitting module by the side wall. An FOV corresponding to the first emitting module is expanded. In addition, there is a smaller angular gap between the second light beam and a light beam obtained after the deflected first sub-light beam passes through the lens, thereby improving continuity of the visual field. In conclusion, this implementation can reduce the visual blind spot.

In a possible implementation of the first aspect, the emitting apparatus further includes the lens, and the lens is configured to: process the first shaped light beam to obtain a third light beam, and process the second light beam to obtain a fourth light beam; and
in a first direction, an included angle between the first light beam and the second light beam is a first angle, an included angle between the third light beam and the fourth light beam is a second angle, and the second angle is less than the first angle. That is, an angular gap between the third light beam and the fourth light beam becomes smaller, and continuity of the visual field is improved.

In the foregoing implementation, the first direction is a direction in which the first emitting module and the second emitting module are arranged, and there is a gap between the first emitting module and the second emitting module in the first direction.

In a possible implementation of the first aspect, the partial light beam includes a second sub-light beam, and the second sub-light beam is reflected by a side wall that is of the first light shaping module and that is away from the second emitting module.

In this implementation, the first sub-light beam is deflected away from the proximate emitting module by the side wall, to expand an FOV corresponding to the first emitting module, and reduce the visual blind spot.

In a possible implementation of the first aspect, the partial light beam is fully reflected by a side wall of the first light shaping module.

In a possible implementation of the first aspect, a side wall of the first light shaping module is coated with a reflective film, and the partial light beam is reflected by the reflective film.

In a possible implementation of the first aspect, an included angle between the side wall and the incident surface is an acute angle. The side wall is slightly deflected to an inside of the light shaping module, so that an incident angle can be reduced, a deflection effect can be improved, and a visual field can be further expanded.

In a possible implementation of the first aspect, the first light shaping module includes a first refractive body, a second refractive body, and a first reflective surface;
the first refractive body includes the incident surface and a first refractive surface, the second refractive body includes a second refractive surface and the emergent surface, and the first refractive surface and the second refractive surface are spaced apart and are opposite to each other;
the first reflective surface is located on the side wall that is of the light shaping module and that is close to the second emitting module, and the first reflective surface is connected to the first refractive surface and the second refractive surface; and
an included angle between the first reflective surface and the first refractive surface is an obtuse angle.

In this implementation, the partial light beam in the first light beam is reflected by the first reflective surface. Due to a reflection function, an equivalent out-light surface of the first shaped light beam is translated toward the second emitting module, and a "gap" between a long-range detection light beam (the third light beam) and a short-range detection light beam (the fourth light beam) is reduced.

Optionally, a transition layer exists between the first refractive surface and the second refractive surface, and a refractive index of the transition layer is lower than a refractive index of the first refractive body.

Due to a refraction effect of light, the first shaped light beam emits stronger light on a side close to the second light beam, and energy of a light beam reflected by the first reflective surface is enhanced, so that more light beams fill a light source gap, to achieve a better blind spot compensation effect.

The first refractive body and the second refractive body are disposed, so that the light deflected by the first refractive body is restored to some extent, to reduce a change in an optical axis between the first light beam and the first shaped light beam, and reduce a direction deviation of a principal axis between the first shaped light beam and the second light beam, thereby reducing a diameter of the lens and reducing complexity of an optical path design.

In a possible implementation of the first aspect, a transition layer exists between the first refractive surface and the second refractive surface. Optionally, the transition layer includes air or a material with a low refractive index. The material with a low refractive index may be air, a crystal, or the like. For example, the material with a low refractive index may be a material whose refractive index is less than a first threshold. The first threshold is, for example, 2, 1.7, 1.5, 1.3, or 1.2.

In a possible implementation of the first aspect, there is defocusing between the second emitting module and a focal plane of the lens. Further, when the first emitting module and the second emitting module are disposed on a same plane, there is also defocusing between the first emitting module and the focal plane of the lens.

Optionally, a distance between the second emitting module and the lens is less than a focal length of the lens, the emitting apparatus further includes a second light shaping module, the second light shaping module is located between the second emitting module and the lens, and the second light shaping module is configured to converge the second light beam to obtain a second shaped light beam.

In the foregoing implementation, the first emitting module is defocused, so that a dispersion effect of the light beam emitted by the first emitting module can be improved, and a visual field range is expanded. To compensate for defocusing of the second emitting module, the second light shaping module is used to converge the second light beam, to ensure a collimation degree of a light beam emitted by the second emitting module, and improve a long-range detection capability.

Optionally, a distance between the second emitting module and the lens is greater than a focal length of the lens, the emitting apparatus further includes a second light shaping module, the second light shaping module is located between the second emitting module and the lens, and the second light shaping module is configured to diverge the second light beam to obtain a second shaped light beam.

In another possible implementation of the first aspect, the first emitting module and the second emitting module are configured to emit light beams in a time division manner, and the first light beam and the second light beam have different transmission time. In such a setting, transmission time of the first light beam and transmission time of the second light beam are alternate, so that it is difficult to form mutual interference when targets in different visual fields are detected.

In another possible implementation of the first aspect, the first emitting module is configured to emit the first light beam in a first time period; and
the second emitting module is configured to emit the second light beam in a second time period, where the first time period and the second time period do not overlap.

In another possible implementation of the first aspect, the second emitting module is further configured to emit a fifth light beam in the first time period. A longest detection range of the fifth light beam is less than the longest detection range of the second light beam.

In this implementation, time of long-range detection and time of short-range detection are isolated, and short-range detection in a larger range is further implemented. This further improves detection efficiency, improves the short-range detection capability of the detection apparatus, and enhances detection performance.

According to a second aspect, an embodiment of this application provides an emitting apparatus. The emitting apparatus includes a first emitting module, a second emitting module, a first light shaping element, and a lens, the first emitting module and the second emitting module are disposed in parallel, and the first emitting module and the second emitting module are located on a focal plane of the lens;
the first emitting module is configured to emit a first light beam, and the second emitting module is configured to emit a second light beam; and
the first light shaping module includes an incident surface and an emergent surface, the first light beam enters the first light shaping module from the incident surface, the first light beam is emitted from the emergent surface to obtain a first shaped light beam, the incident surface and the emergent surface are refracting surfaces, and the incident surface and the emergent surface are refracting surfaces.

In this implementation, the second emitting module is disposed on the focal plane of the lens, to improve a collimation degree of the second light beam, and improve a long-range detection capability. The first light shaping module refracts a light beam two times, so that an equivalent light source corresponding to the first shaped light beam is defocused to some extent, and the first shaped light beam is diffused when passing through the lens, to expand an FOV of the second shaped light beam in object space. In this way, a visual field of the apparatus is expanded without reducing a long-range detection capability, a blind spot of the detection apparatus is reduced, and detection efficiency is improved.

In a possible implementation of the second aspect, a longest detection range of the first light beam is less than a longest detection range of the second light beam.

In another possible implementation of the second aspect, the first emitting module and the second emitting module are configured to emit light beams in a time division manner, and the first light beam and the second light beam have different transmission time.

In another possible implementation of the second aspect, the first emitting module is configured to emit the first light beam in a first time period; and
the second emitting module is configured to emit the second light beam in a second time period, where the first time period and the second time period do not overlap.

In another possible implementation of the second aspect, the second emitting module is further configured to emit a fifth light beam in the first time period. A longest detection range of the fifth light beam is less than the longest detection range of the second light beam.

According to a third aspect, an embodiment of this application provides an emitting apparatus. The emitting apparatus includes a first emitting module, a second emitting module, a second light shaping module, and a lens, there is defocusing between a focal plane of the lens and each of the first emitting module and the second emitting module, and a distance between the first emitting module and the lens is less than a focal length;
the first emitting module is configured to emit a first light beam, and the second emitting module is configured to emit a second light beam; and
the second light shaping module is configured to converge the second light beam to obtain a second shaped light beam, where the first light beam and the second shaped light beam are emergent through the lens.

In this implementation, the first emitting module has specific defocusing, so that the first light beam is diffused when passing through the lens, to expand a field of view of the first light beam. To compensate for defocusing of the second emitting module, the second light shaping module is used to converge the second light beam, to ensure a collimation degree of a light beam emitted by the second emitting module, improve a long-range detection capability, expand a visual field without reducing the long-range detection capability, reduce a blind spot of the detection apparatus, and improve detection efficiency.

Optionally, the second shaped light beam corresponds to a second equivalent light source, and a distance between the second equivalent light source and the focal plane is less than a distance between the second emitting module and the focal plane.

In a possible implementation of the third aspect, the emitting apparatus further includes a first light shaping module, the first light shaping module includes an incident surface, a side wall, and an emergent surface, the first light beam enters the first light shaping module from the incident surface, a partial light beam in the first light beam is reflected by the side wall, and the first light beam is emitted from the emergent surface to obtain a first shaped light beam; and
the first shaped light beam is emitted through the lens.

In a possible implementation of the third aspect, a longest detection range of the first light beam is less than a longest detection range of the second light beam.

In another possible implementation of the third aspect, the first emitting module and the second emitting module are configured to emit light beams in a time division manner, and the first light beam and the second light beam have different transmission time.

In another possible implementation of the third aspect, the first emitting module is configured to emit the first light beam in a first time period; and
the second emitting module is configured to emit the second light beam in a second time period, where the first time period and the second time period do not overlap.

In another possible implementation of the third aspect, the second emitting module is further configured to emit a fifth light beam in the first time period. A longest detection range of the fifth light beam is less than the longest detection range of the second light beam.

According to a fourth aspect, an embodiment of this application further provides a detection apparatus. The detection apparatus includes an emitting apparatus and a detector, and the emitting apparatus includes the emitting apparatus described in any one of the first aspect or the possible implementations of the first aspect; or
the emitting apparatus includes the emitting apparatus described in any one of the second aspect or the possible implementations of the second aspect; or
the emitting apparatus includes the emitting apparatus described in any one of the third aspect or the possible implementations of the third aspect.

In a possible implementation of the fourth aspect, a first emitting module in the emitting apparatus is configured to emit a first light beam, and a second emitting module in the emitting apparatus is configured to emit a second light beam.

The detector is configured to receive an echo signal corresponding to the first light beam and an echo signal corresponding to the second light beam.

According to a fifth aspect, an embodiment of this application further provides a terminal. The terminal includes the emitting apparatus described in the first aspect or any implementation of the first aspect, or includes the detection apparatus described in the second aspect.

Optionally, the terminal may be an intelligent terminal such as a vehicle, an uncrewed aerial vehicle, or a robot, or a transportation tool.

For some beneficial effects of the second aspect to the fifth aspect of this application, refer to the beneficial effects of the first aspect. Details are not described herein again.

### BRIEF DESCRIPTION OF DRAWINGS

The following briefly describes accompanying drawings used in descriptions of embodiments.
FIG. 1 is a diagram of an emitting field of vision and a receiving field of vision of a detection apparatus;
FIG. 2 is a diagram of a structure of an emitting apparatus according to an embodiment of this application;
FIG. 3 is a diagram of receiving of another emitting apparatus according to an embodiment of this application;
FIG. 4 is a diagram of an FOV according to an embodiment of this application;
FIG. 5 is a diagram of another FOV;
FIG. 6 is a diagram of an emitting optical path of an emitting apparatus according to an embodiment of this application;
FIG. 7 is a diagram of a structure of another emitting apparatus according to an embodiment of this application;
FIG. 8 is a diagram of another FOV according to an embodiment of this application;
FIG. 9 is a diagram of a structure of another emitting apparatus according to an embodiment of this application;
FIG. 10 is a diagram of a structure of another emitting apparatus according to an embodiment of this application;
FIG. 11 is a diagram of a structure of another emitting apparatus according to an embodiment of this application;
FIG. 12 is a diagram of a structure of another first light shaping module according to an embodiment of this application;
FIG. 13 is a diagram of a structure of another emitting apparatus according to an embodiment of this application;
FIG. 14 is a diagram of a structure of another first light shaping module according to an embodiment of this application;
FIG. 15 is a diagram of a structure of another emitting apparatus according to an embodiment of this application;
FIG. 16 is a diagram of a structure of another first light shaping module according to an embodiment of this application;
FIG. 17 is a diagram of a structure of another first light shaping module according to an embodiment of this application;
FIG. 18 is a diagram of a structure of another emitting apparatus according to an embodiment of this application;
FIG. 19 is a diagram of a detection range according to an embodiment of this application;
FIG. 20 is a diagram of a light emitting time sequence according to an embodiment of this application;
FIG. 21 is a diagram of another light emitting time sequence according to an embodiment of this application;
FIG. 22 is a diagram of a structure of another emitting apparatus according to an embodiment of this application;
FIG. 23 is a diagram of an emitting optical path of another emitting apparatus according to an embodiment of this application;
FIG. 24 is a diagram of a light beam energy distribution in angular space according to an embodiment of this application;
FIG. 25 is a diagram of an emitting optical path of another emitting apparatus according to an embodiment of this application;
FIG. 26 is a diagram of a light beam energy distribution in other angular space according to an embodiment of this application;
FIG. 27 is a diagram of an emitting optical path of another emitting apparatus according to an embodiment of this application;
FIG. 28 is a diagram of an emitting optical path of another emitting apparatus according to an embodiment of this application;
FIG. 29 is a diagram of a structure of another emitting apparatus according to an embodiment of this application;
FIG. 30 is a diagram of an emitting optical path of another emitting apparatus according to an embodiment of this application;
FIG. 31 is a diagram of an emitting optical path of another emitting apparatus according to an embodiment of this application;
FIG. 32 is a diagram of an emitting optical path of another emitting apparatus according to an embodiment of this application;
FIG. 33 is a diagram of a structure of another emitting apparatus according to an embodiment of this application;
FIG. 34 is a diagram of an emitting optical path of another emitting apparatus according to an embodiment of this application;
FIG. 35 is a diagram of an emitting optical path of another emitting apparatus according to an embodiment of this application; and
FIG. 36 is a diagram of a structure of another emitting apparatus according to an embodiment of this application.

### DESCRIPTION OF EMBODIMENTS

The following further describes in detail embodiments of this application with reference to accompanying drawings.

For ease of understanding, some concepts related to embodiments of this application are described for reference by using examples below. Details are as follows.

### 1. Detection apparatus

The detection apparatus mentioned in embodiments of this application may be a lidar, or may be another optical detection apparatus, for example, a fusion detection apparatus (for example, a detection apparatus that integrates a radar detector and an image sensor). The lidar is used as an example. A working principle of the lidar is to detect a target in a visual field by emitting a detection signal and receiving a returned wave.

In a possible use scenario, the detection apparatus in embodiments of this application can be used in various fields such as intelligent driving, intelligent transportation, intelligent manufacturing, environmental detection, surveying and mapping, and an uncrewed aerial vehicle, and can complete one or more functions of target detection, range measurement, speed measurement, target tracking, and imaging recognition.

In a possible application location, the detection apparatus in embodiments of this application may be used in a vehicle-mounted detection apparatus (for example, an automotive radar) and a roadside detection apparatus (for example, an intersection radar), and may also be used in another detection apparatus, for example, a detection apparatus mounted on an apparatus such as an uncrewed aerial vehicle, a robot, a rail vehicle, a bicycle, a traffic light, a speed measurement apparatus, or a base station. A mounting location of the detection apparatus is not limited in this application.

### 2. Field of view (field of view, FOV)

A line of sight (line of sight, LOS) area in which transmission of a signal (for example, a radio wave or a laser) is not interrupted is required between an emit end of a detection apparatus and a target object and/or between a receive end of the detection apparatus and the target object. The line of sight area may be understood as a field of view, or referred to as a visual field, or referred to as a field of vision.

In some scenarios, an included angle whose vertex is a lens of an optical instrument and that includes two edges of a maximum range in which an object image of a measured target may pass through the lens is referred to as a field of view. The field of view determines a visual field of the optical instrument. A larger field of view leads to a larger visual field.

The foregoing descriptions of the technical terms are optionally used in the following embodiments.

A detection principle of the detection apparatus is as follows: The emit end emits a detection signal to object space, so that a target in the object space can be illuminated by the detection signal; and the receive end may receive an echo signal formed by reflecting the detection signal on the target, and obtain related information of the target based on the echo signal.

Because a power of a signal emitted by the detection apparatus is usually limited, when a target in a long range needs to be detected, the emitted detection signal has a high collimation degree and a small divergence angle. Consequently, the detection signal emitted by the detection apparatus has a small visual field, and there is a large visual blind spot. Especially when the emit end and the receive end are of an off-axis architecture, the visual blind spot makes an effective detection range of the detection apparatus small.

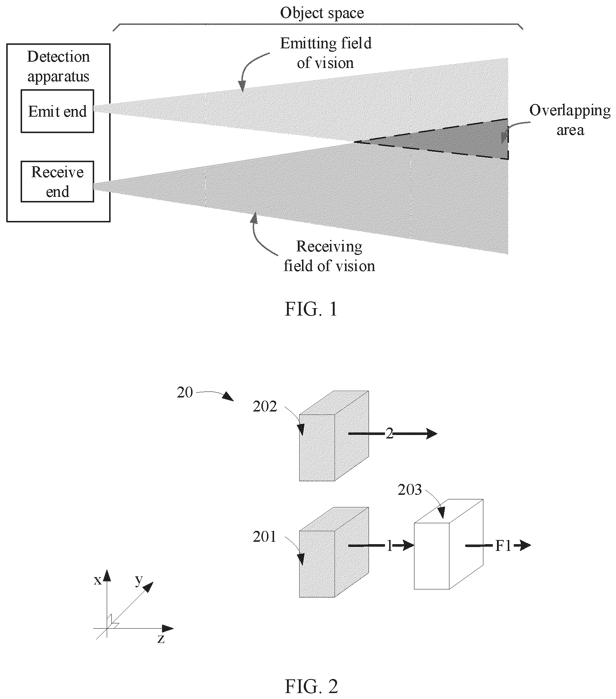

FIG. 1 is a diagram of an emitting field of vision and a receiving field of vision of a detection apparatus. An emit end and a receive end are respectively configured to: emit a detection signal and receive an echo signal. The emitting field of vision is object space covered by a detection signal emitted by the emit end, and the receiving field of vision is object space in which the receive end can receive light. Because the receive end can receive an echo signal of the detection signal only in the object space covered by the detection signal, an overlapping area between the emitting field of vision and the receiving field of vision is an effective detection range of the detection apparatus. It can be learned that, because the detection signal has a high collimation degree, the emitting field of vision is narrow and long, and correspondingly, the overlapping area is also narrow and long, the effective detection range is small, and a blind spot is large. Only a very small detection range can be detected through one time of detection. In this way, detection efficiency is low.

In addition, a start location of the overlapping area is a location far away from the detection apparatus. In short-range object space before the overlapping area, the receive end cannot receive the echo signal of the detection signal, and a near-field blind spot is formed. A larger off-axis degree of the emit end and the receive end leads to a larger near-field blind spot, which seriously affects detection efficiency.

In view of this, embodiments of this application provide an emitting apparatus, a detection apparatus, and a terminal, to expand a visual field of the detection apparatus, narrow a visual blind spot of the detection apparatus, and improve detection efficiency.

The following describes in detail solutions in embodiments of this application.

FIG. 2 is a diagram of a structure of a possible emitting apparatus according to an embodiment of this application. An emitting apparatus 20 may include a plurality of emitting modules and a first light shaping module 203. For example, the plurality of emitting modules include at least a first emitting module 201 and a second emitting module 202. The following provides descriptions by using the first emitting module 201 and the second emitting module 202 as an example. In a specific implementation process, there may be one or more first emitting modules 201 and one or more second emitting modules 202.

The first emitting module 201 is configured to emit a light beam (which is referred to as a first light beam for ease of differentiation), and the first light beam is represented by an arrowed line marked 1 in FIG. 2.

The second emitting module 202 is configured to emit a light beam (which is referred to as a second light beam for ease of differentiation), and the first light beam is represented by an arrowed line marked 2 in FIG. 2. The first emitting module 201 and the second emitting module 202 are disposed in parallel.

The first light shaping module 203 is configured to shape the first light beam to obtain a first shaped light beam, which is represented by an arrowed line marked F1 in FIG. 2. An FOV corresponding to the first shaped light beam in object space is greater than an FOV of the first light beam in the object space before the first light beam passes through the first light shaping module.

In the emitting apparatus 20, the first light shaping module processes the first light beam, to expand an emitting FOV of the first emitting module. When an emitting module is used in the detection apparatus, a visual blind spot of the detection apparatus can be narrowed, and detection efficiency can be improved. The second light beam is not processed by the first light shaping module. In other words, the second light beam is not deflected. The second light beam can still maintain a good collimation degree when arriving in the object space, so that a long-range detection capability of the second light beam is almost not affected. Therefore, in this embodiment of this application, a long-range detection capability of the first detection apparatus is almost not reduced. In addition, the first emitting module and the second emitting module are disposed in parallel, and the first shaped light beam may detect a blind spot of the second light beam, to narrow a visual blind spot of the detection apparatus, and improve detection efficiency.

In a possible implementation, the first light shaping module 203 includes a reflective surface, and the reflective surface is configured to reflect a partial light beam in the first light beam, to change a direction of the partial light beam in the first light beam, thereby expanding an FOV of the first light beam. For example, the first light shaping module is a reflective mirror, and the reflective mirror is disposed between the first emitting module and the second emitting module. Light of an edge part of the first light beam may be illuminated on the reflective mirror and reflected by the reflective mirror. Another light beam in the first light beam is not reflected by the reflective mirror.

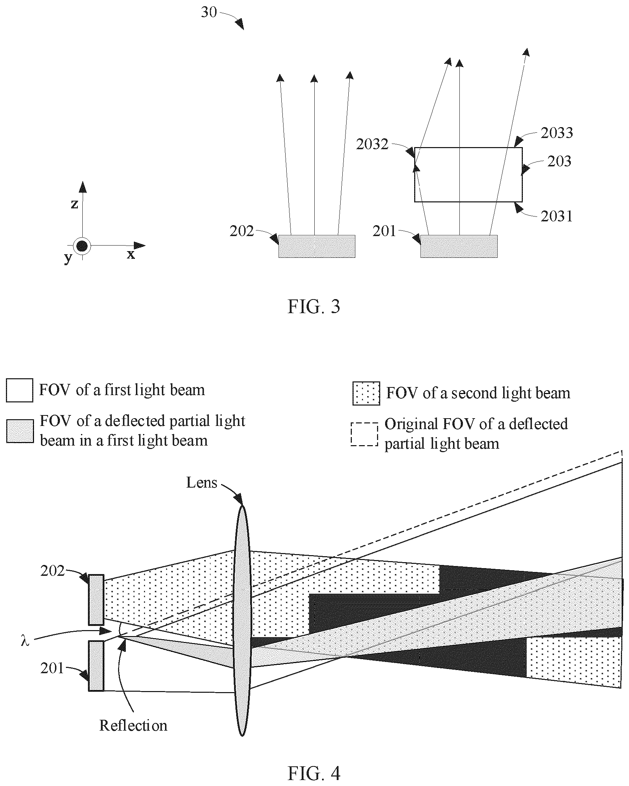

In another possible implementation, the first light shaping module includes an incident surface, a side wall, and an emergent surface, and a partial light beam in the first light beam is reflected by the side wall, so that a propagation direction of the partial light beam in the first light beam is changed. FIG. 3 is a diagram of a structure of another possible emitting apparatus according to an embodiment of this application. A first light shaping module 203 in an emitting apparatus 30 includes an incident surface 2031, a side wall 2032, and an emergent surface 2033. The side wall 2032 is configured to reflect a partial light beam in a first light beam, to change a propagation direction of the partial light beam in a first light beam, to expand an FOV of the first light beam. As shown in FIG. 3, the first light beam enters a first light shaping module 203 from the incident surface, the partial light beam in the first light beam is reflected by the side wall 2032 of the first light shaping module, and the first light beam is emitted from the emergent surface to obtain a first shaped light beam.

FIG. 4 is a diagram of an FOV according to an embodiment of this application. A spot part is an FOV of a second light beam, a shadow part is an FOV that is of the partial light beam in the first light beam and that is obtained after the partial light beam in the first light beam is reflected, and a dashed line part is an original FOV that is of the first light beam and that exists before the first light beam is shaped. It is easily learned that the partial light beam in the first light beam is reflected, a transmission direction is deflected, and a transmission direction of the deflected partial light beam is close to an edge of the second light beam. The reflected light beam is deflected to an outside of an unreflected light beam after passing through a lens, and a transmission direction is closer to that of the first light beam, so that an FOV corresponding to the first light beam increases, and a visual field of the detection apparatus is correspondingly expanded. After the visual field is expanded, a target in a larger range may be detected through one time of detection, thereby improving detection efficiency.

Optionally, a principal axis of the lens may be parallel to or coincide with an optical axis of the second light beam. Certainly, this application is also applicable to a non-parallel or nonoverlapping case.

In a possible implementation, the first emitting module 201 and the second emitting module 202 are connected to a same circuit board. The circuit board is a support body of an electronic component. A conductor on the circuit board serves as a line for connecting the electronic component, and includes but is not limited to a printed circuit board (printed circuit board, PCB), a flexible printed circuit board (flexible printed circuit board, FPC), and the like.

Further, the first emitting module 201 and the second emitting module 202 may be electronic components, and are electrically connected to the circuit board together.

Alternatively, optionally, electrical performance of the first emitting module 201 and the second emitting module 202 is isolated from that of the circuit board. In this case, the first emitting module 201 and the second emitting module 202 may be fastened to the circuit board, and are not necessarily electrically connected to the circuit board.

Alternatively, the circuit board may alternatively be a substrate, and the substrate may not include a conductor for emitting an electrical signal. The first emitting module and the second emitting module may be fastened to the substrate.

It should be understood that x, y, and z coordinates shown in embodiments of this application are example identifiers provided for ease of understanding, and are not intended to limit embodiments of this application.

The following provides some possible designs based on the foregoing emitting apparatus. The following plurality of designs may be separately implemented, or may be implemented in combination. For ease of understanding, an implementation of a combination case is also described below by using an example. The following first separately describes some possible designs.

In a possible design, the first light beam and the second light beam have different longest detection ranges. For example, a longest detection range of the first light beam is less than a shortest detection range of the second light beam. For another example, a longest detection range of the second light beam is less than a shortest detection range of the first light beam.

The following provides descriptions by using an example in which the longest detection range of the first light beam is small.

When the longest detection range of the first light beam is less than the shortest detection range of the second light beam, the second light beam is applicable to long-range detection, and the first light beam is applicable to short-range detection. Because the first light shaping module does not shape the first light beam, that is, a collimation degree of the second light beam may not be affected, a long-range detection capability of the second light beam is ensured. A light beam emitted by the second emitting module may detect a blind spot formed during long-range detection. A visual field of short-range detection is improved by using the first light shaping module, to achieve a better blind spot compensation effect, and enhance detection performance of the detection apparatus.

In a possible implementation, that the longest detection range of the first light beam is less than the longest detection range of the second light beam may be implemented in the following manners:
Implementation 1: Energy density of the first light beam is less than energy density of the second light beam. Energy density of a signal is related to a longest detection range of the signal. Smaller capability density indicates a smaller longest detection range. Therefore, the first light beam is applicable to short-range detection. In addition, the longest detection range of the first light beam is short, so that mutual interference between the first light beam and the second light beam can also be avoided, short-range detection accuracy and long-range detection accuracy of the detection apparatus are improved, and detection performance is improved.
Implementation 2: Power of the first light beam is less than power of the second light beam. A power of a signal is related to a longest detection range of the signal. A smaller power indicates a smaller longest detection range. Therefore, the first light beam is applicable to short-range detection.

The foregoing implementations are merely examples. In a specific implementation case, the first emitting module may be set to be defocused, the first light beam may be set to be diverged, or the like, so that the first light beam is applicable to short-range detection and/or detection for blind spot compensation.

In a possible implementation, when the first emitting module is configured to perform short-range detection, the FOV of the first emitting module can be expanded by setting the first emitting module and the lens to be defocused relative to each other, to increase a short-range detection range, and further reduce a visual blind spot.

This is not limited to the foregoing design. In a possible design, the first emitting module and the second emitting module each include one or more emitters.

For example, the first emitting module may include a long-strip laser, and an out-light surface of the first emitting module is a rectangular long strip. For another example, the first emitting module may include a plurality of lasers, and electrical performance of the plurality of lasers is isolated by using a gap.

Optionally, the emitter may be an edge-emitting laser, a vertical surface emitting laser, or the like.

When the vertical surface emitter is disposed on a circuit board, an out-light surface is a surface parallel to the circuit board. Therefore, an out-light direction of the vertical surface emitter is a direction away from the circuit board. The vertical surface emitter includes but is not limited to a vertical cavity surface emitting laser (vertical cavity surface emitting laser, VCSEL), a photonic crystal surface emitting semiconductor laser (photonic crystal surface emitting semiconductor lasers, PCSEL), or the like.

When the edge-emitting laser (edge- emitting laser, EEL) is disposed on a circuit board, an out-light surface is a side of the laser. Therefore, an out-light direction of the edge-emitting laser is a direction parallel to the circuit board. Optionally, the EEL may alternatively be another apparatus that emits light at an edge of a light emitting component, for example, a silicon photonic chip.

This is not limited to the foregoing design. In another possible design, the emitting apparatus further includes a lens, and the lens is configured to: process the first shaped light beam to obtain a third light beam, and process the second light beam to obtain a fourth light beam. A field of view of the third light beam is greater than a field of view of an original light beam. The "original light beam" described herein is a light beam obtained after the first light beam passes through the lens without being processed by the first light shaping module. An FOV of the third light beam may be expanded by using the first light shaping module, a visual field of the detection apparatus may also be correspondingly increased, a blind spot may be correspondingly reduced, and detection efficiency of the detection apparatus is improved.

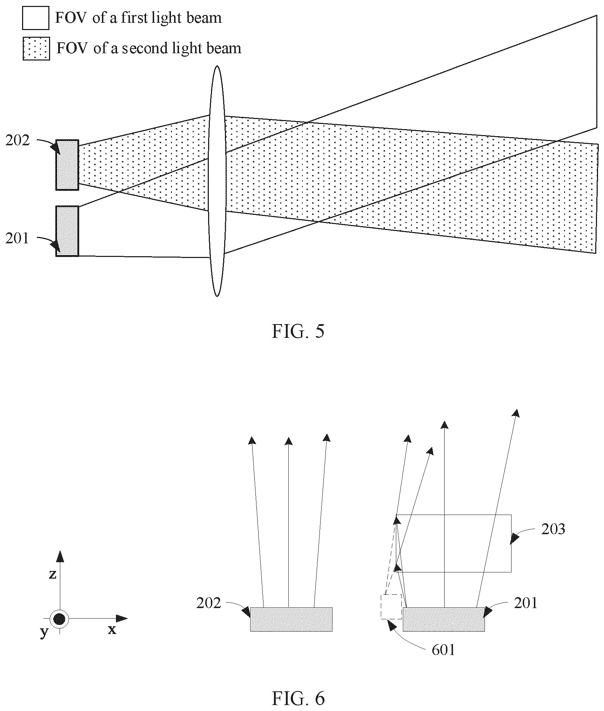

FIG. 5 is a diagram of another FOV. After a light beam from the first emitting module passes through the lens without being processed by the first light shaping module, an FOV of the first emitting module in the object space is less than an FOV of the third light beam in the object space in FIG. 4. Therefore, an FOV of the light beam emitted by the first emitting module in the object space is increased by using the first shaping module, and a blind spot is reduced, thereby improving detection efficiency.

This is not limited to the foregoing design. In another possible design, the partial light beam includes a first sub-light beam, and the first sub-light beam is reflected by a side wall that is of the first light shaping module and that is close to the second emitting module. As shown in FIG. 3, the side wall 2032 is a side wall close to the second emitting module.

In this implementation, the first sub-light beam is deflected away from the second emitting module by the side wall. An FOV corresponding to the first emitting module is expanded. In addition, there is a smaller angular gap between the second light beam and a light beam obtained after the deflected first sub-light beam passes through the lens, thereby improving continuity of the visual field. In conclusion, this implementation can reduce the visual blind spot.

In a possible implementation, an included angle between the first light beam and the second light beam is a first angle. As shown in FIG. 4, the first angle is λ. The third light beam is obtained after the first shaped light beam passes through the lens, and a light beam obtained after the second light beam passes through the lens is the fourth light beam. An included angle (or referred to as a second angle) between the third light beam and the fourth light beam is an angle (or referred to as a second angle) is less than the first angle. That is, the second angle is less than λ. With reference to FIG. 4, it can be learned that, after the first sub-light beam passes through the lens, blind spot compensation is further performed for the visual field, so that an angular gap between the third light beam and the fourth light beam becomes smaller, and continuity of the visual field is improved.

The first angle and the second angle are angles in a first direction (for example, an x direction), and the first direction is a direction in which the first emitting module and the second emitting module are arranged. In other words, there is a gap between the first emitting module and the second emitting module in the first direction.

FIG. 6 is a diagram of an emitting optical path of a possible emitting apparatus according to an embodiment of this application. The first sub-light beam is reflected by the first light shaping module 203. A reverse extension line of an optical path of the reflected first sub-light beam may converge on an equivalent light source 601, and the equivalent light source may also be referred to as a light source virtual image. In the x direction, a distance between the equivalent light source 601 and the second emitting module 202 is less than a distance between the second emitting module 202 and the first emitting module 201. Because the distance between the equivalent light source 601 and the first emitting module 201 is shorter, after the reflected first sub-light beam and the second light beam pass through the lens, an angular gap between the reflected first sub-light beam and the second light beam is smaller, to achieve a better blind spot compensation effect.

In addition, the equivalent light source described in embodiments of this application is a virtual light source that is made to facilitate understanding of technical effects of an optical path and an optical element, and does not actually exist in the emitting apparatus.

This is not limited to the foregoing design. In a possible design, the partial light beam includes a second sub-light beam, and the second sub-light beam is reflected by a side wall that is of the first light shaping module and that is away from the second emitting module.

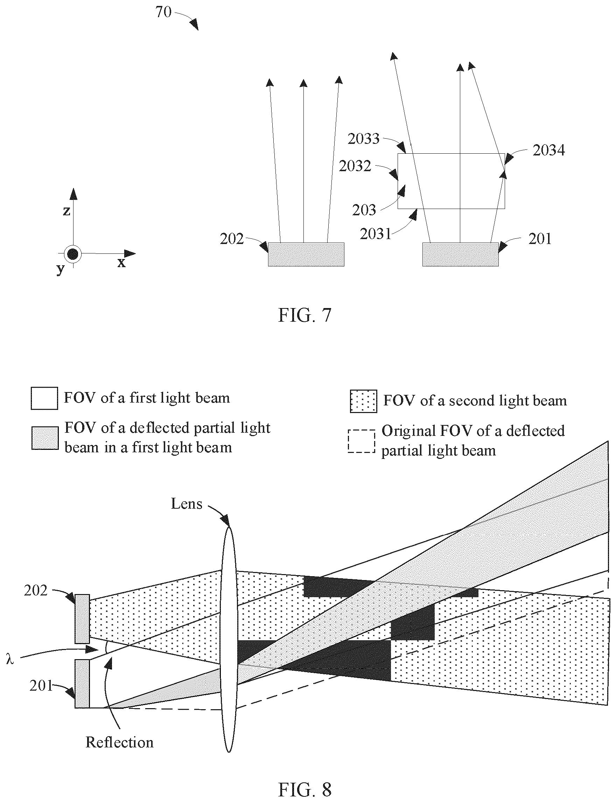

FIG. 7 is a diagram of a structure of another possible emitting apparatus according to an embodiment of this application. A first light shaping module 203 in an emitting apparatus 70 further includes a side wall 2034, and the side wall 2034 is far away from the first emitting module.

FIG. 8 is a diagram of another FOV according to an embodiment of this application. A spot part is an FOV of a second light beam, a shadow part is an FOV that is of a partial light beam and that is obtained after the partial light beam is reflected, and a dashed line part is an original FOV that is of a first light beam and that exists before the first light beam is shaped.

It is easily learned that a partial light beam in the first light beam is reflected, a transmission direction is deflected, and a transmission direction of the deflected partial light beam is deflected to an outside of an FOV of an unreflected light beam. The reflected light beam is deflected to the outside of the unreflected light beam after passing through a lens, and a transmission direction is farther away from that of the first light beam, so that an FOV corresponding to the first light beam increases, and a visual field of the detection apparatus is correspondingly expanded. After the FOV is expanded, a target in a larger range may be detected through one time of detection, thereby improving detection efficiency.

Optionally, the first light beam may be reflected by both side walls.

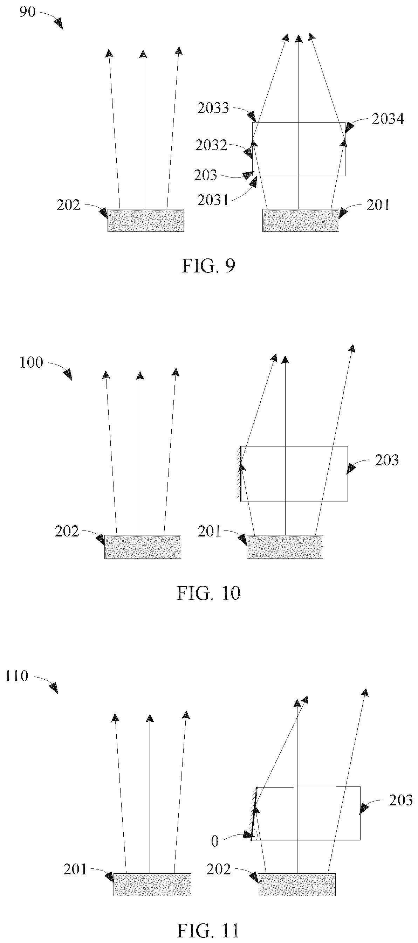

FIG. 9 is a diagram of a structure of another emitting apparatus according to an embodiment of this application. In an emitting apparatus 90, a first light beam emitted by a first emitting module 201 is processed by a first light shaping module to obtain a first shaped light beam. In the first light beam, a partial light beam is reflected by a side wall 2032 that is of a first light shaping module 203 and that is close to a second emitting module, a partial light beam is reflected by a side wall 2034 that is of the first light shaping module 203 and that is away from the second emitting module, and a partial light beam is not reflected by a side wall. After the first light beam passes through a lens, an FOV corresponding to the first light beam is expanded to two sides, to further increase a visual field of the detection apparatus and improve detection efficiency.

This is limited to the foregoing design. In another possible design, a partial light beam is fully reflected by a side wall of the first light shaping module. Total reflection (total internal reflection, TIR), also referred to as total internal reflection, is an optical phenomenon. When light enters a medium with a low refractive index from a medium with a high refractive index, if an incident angle is greater than a critical angle, refracted light disappears, and incident light is reflected instead of entering the medium with a low refractive index.

For example, the first light shaping module is an optical waveguide, an optical flat, or the like, a refractive index of the first light shaping module is usually higher than that of air, and a refractive surface is formed between different refractive indexes. When a partial light beam in the first light beam is incident on a side wall of the first light shaping module, reflection or total reflection is generated on the side wall.

A light beam is reflected through total reflection, so that manufacturing costs of an optical module can be reduced.

This is not limited to the foregoing design. In another possible design, reflection may be implemented through coating.

FIG. 10 is a diagram of a structure of another possible emitting apparatus according to an embodiment of this application. In an emitting apparatus 100, a side wall of a first light shaping module 203 includes a reflective surface, and a partial light beam in a first light beam is reflected by the reflective surface. Herein, a side wall close to a second emitting module 202 is used as an example for description. This is also applicable to another side wall.

Optionally, the reflective surface may be implemented by using a reflective film. For example, the side wall of the first light shaping module is coated with a reflective film, and a partial light beam is reflected by the reflective film.

A light beam is reflected by the reflective surface, so that the light beam can be no longer limited by an incident angle, to improve flexibility. In addition, reflection is performed by the reflective surface, to reduce a possibility that the light beam passes through the refractive surface, and reduce stray light inside the detection apparatus.

In a possible implementation, an included angle between the side wall and a horizontal direction is an acute angle. To be specific, the side wall is deflected to an inside of a light shaping module along an out-light direction. Such a setting may reduce an incident angle at which the light beam is incident on the side wall, to reduce a deflection angle, and further expand a visual field.

A horizontal plane is parallel to an out-light surface of a first emitting module, and/or is parallel to an incident surface. FIG. 11 is a diagram of a structure of another possible emitting apparatus according to an embodiment of this application. In an emitting apparatus 110, an included angle between a side wall of a first light shaping module 203 and an incident surface is θ, and θ<90°.

Optionally, the side wall may be a side wall on one side, for example, a side wall close to a second emitting module or a side wall away from a second emitting module. Certainly, this application is also applicable to a case in which side walls on two sides are deflected to an inside.

This is not limited to the foregoing design. In another possible design, a second optical module may be implemented by using a group of a refractive body and a reflective surface.

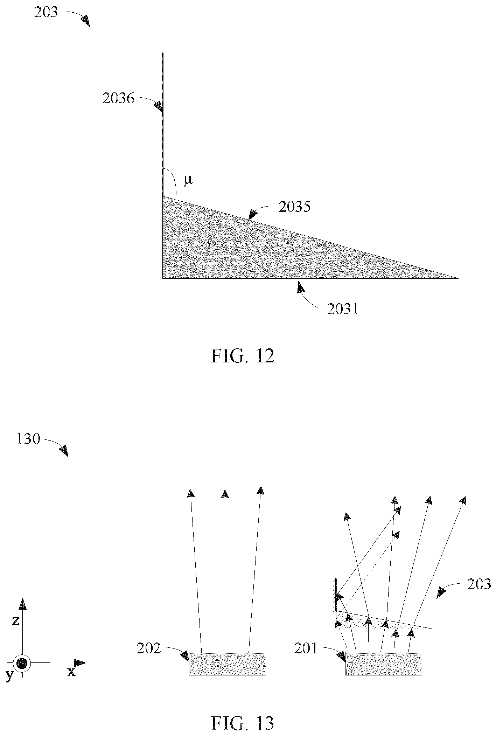

FIG. 12 is a diagram of a structure of a first light shaping module according to an embodiment of this application. The first light shaping module 203 includes a first refractive body and a first reflective surface 2036.

The first refractive body includes an incident surface 2031 and a first refractive surface 2035. The first reflective surface 2036 is located on a side that is of the first refractive surface and that is away from the incident surface.

FIG. 13 is a diagram of a structure of another possible emitting apparatus according to an embodiment of this application. A first light shaping module 203 in an emitting apparatus 130 includes the first light shaping module shown in FIG. 12. A light beam from a first emitting module 201 is emitted after passing through an incident surface 2031 and a first refractive surface 2035, a partial light beam is reflected by a first reflective surface 2036 after passing through the first refractive surface 2035, and a partial light beam is not reflected by the first reflective surface 2036.

Due to a refraction effect of light, after the light beam passes through a first refractive body, the light beam is deflected to an outside of the first light shaping module. Therefore, an edge part of the light beam has more light beam widths and more light beam energy. Because of a deflection effect of the first refractive body, more light is deflected to the first reflective surface 2036. Therefore, energy of a light beam reflected by the first reflective surface 2036 increases. When this part of light arrives in object space, a visual field of a reflected light beam may be expanded, to improve a blind spot compensation effect, and improve detection efficiency.

Optionally, the first refractive surface 2035 is not parallel to a horizontal direction. A non-parallel refractive surface is used, so that refraction and deflection of the light beam can be further improved, and energy of the light beam reflected by the first reflective surface 2036 is further increased.

As shown in FIG. 12, an included angle between the first reflective surface and the first refractive surface is an obtuse angle. For example, an included angle between the first reflective surface 2036 and the first refractive surface 2035 is µ, and µ<90°.

Optionally, the incident surface is parallel to an out-light surface of the first emitting module 201, and an included angle exists between the first refractive surface and the out-light surface of the first emitting module 201. For another example, an included angle exists between the first refractive surface 2035 and the incident surface. As shown in FIG. 13, along a direction from the second emitting module 202 to the first emitting module 201, the first refractive surface 2035 is deflected to the incident surface, to form an included angle with the incident surface.

Alternatively, optionally, the first refractive surface 2035 is parallel to an out-light surface of the first emitting module, and the incident surface is not parallel to the out-light surface of the first emitting module.

In some possible scenarios, the first refractive surface 2035 may be considered as an emergent surface of the first light shaping module. Optionally, the first refractive body further includes a side wall. As shown by a dashed line with an arrow in FIG. 13, a part of light is reflected by the side wall of the first refractive body, so that a propagation direction of the part of light changes. This part of light may also expand a visual field of the first emitting module, and further improve detection efficiency.

In a possible implementation, the first light shaping module further includes a second refractive body. The second refractive body includes a second refractive surface, and the second refractive surface and the first refractive surface are spaced apart and are opposite to each other. That the second refractive surface and the first refractive surface are spaced apart and are opposite to each other means that the two surfaces are disposed opposite to each other, and there is a spacing between the two surfaces.

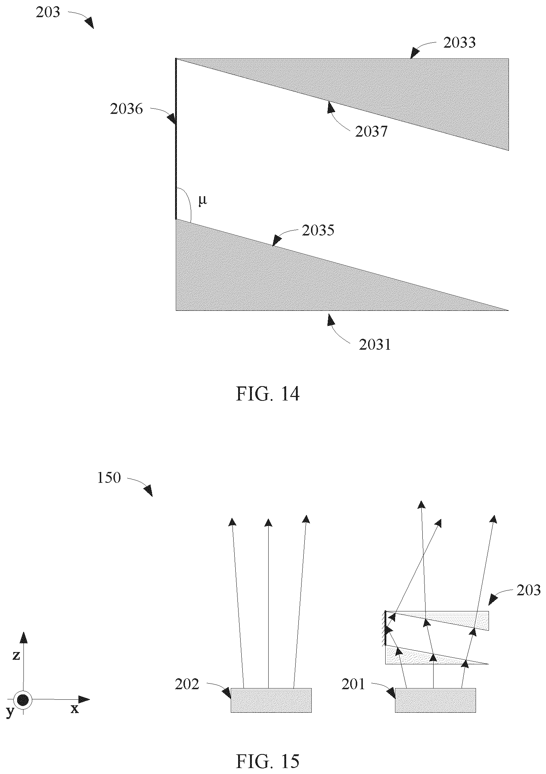

FIG. 14 is a diagram of a structure of another first light shaping module according to an embodiment of this application. The first light shaping module 203 includes the first refractive body, the second refractive body, and the first reflective surface 2036. The first refractive body includes the incident surface 2031 and the first refractive surface 2035, the second refractive body includes a second refractive surface 2037 and an emergent surface 2033, and the first refractive surface 2035 and the second refractive surface 2037 are spaced apart and are opposite to each other. The first reflective surface 2036 is connected to the first refractive surface 2035 and the second refractive surface 2037.

Optionally, the first refractive surface 2035 and the second refractive surface 2037 may be parallel. Certainly, this application is also applicable to a case in which the first refractive surface 2035 and the second refractive surface 2037 are not completely parallel.

FIG. 15 is a diagram of a structure of another possible emitting apparatus according to an embodiment of this application. A first light shaping module in an emitting apparatus 150 includes the optical module shown in FIG. 14. A light beam from a first emitting module 201 is emitted through an incident surface 2031, a first refractive surface 2035, a second refractive surface, and an emergent surface. A partial light beam is reflected by a first reflective surface 2036 after passing through the first refractive surface 2035, and a partial light beam is not reflected by the first reflective surface 2036.

In the emitting apparatus 150 shown in FIG. 15, due to a refraction effect of light, a gap between two refractive bodies makes light disperse to an outside, so that a first shaped light beam emits stronger light on a side close to a second light beam, energy of a light beam reflected by the first reflective surface is enhanced, and more light fills a gap, to further expand a visual field, and achieve a better blind spot compensation effect.

In addition, a second refractive body is disposed on a basis of a first refractive body, so that deflected light is restored to some extent, to reduce a change in an optical axis between a first light beam and the first shaped light beam, and reduce a direction deviation of a principal axis between the first shaped light beam and the second light beam, thereby reducing a diameter of a lens and reducing complexity of an optical path design. Especially when an optical element is aged or loosened, this implementation may reduce an optical path difference that is between the first shaped light beam and the second light beam and that is caused by a change in performance and a location of the element, thereby improving stability of a detection system.

Optionally, a transition layer exists between the first refractive surface and the second refractive surface.

In a possible implementation, a refractive index of the transition layer is lower than a refractive index of the first refractive body and/or a refractive index of the second refractive body. When light enters a medium with a low refractive index from a medium with a high refractive index, the light is deflected away from a normal line, so that more light beams are biased toward a side wall of the first light shaping module, to enhance light beam energy reflected by the optical module, and achieve a better blind spot compensation effect.

Optionally, the transition layer includes air or a material with a low refractive index. For example, the material with a low refractive index may be a material whose refractive index is less than a first threshold. The first threshold is, for example, 2, 1.7, 1.5, 1.3, or 1.2.

Optionally, the first refractive body may be implemented by using an optical element such as a prism or an optical flat, for example, a triangular prism or a right-angle prism. Similarly, the second refractive body may also be implemented by using an optical element such as a prism or an optical flat.

The foregoing describes the first light shaping module by using a cross-section shape. For ease of understanding, the following lists two overall implementations of the first light shaping module.

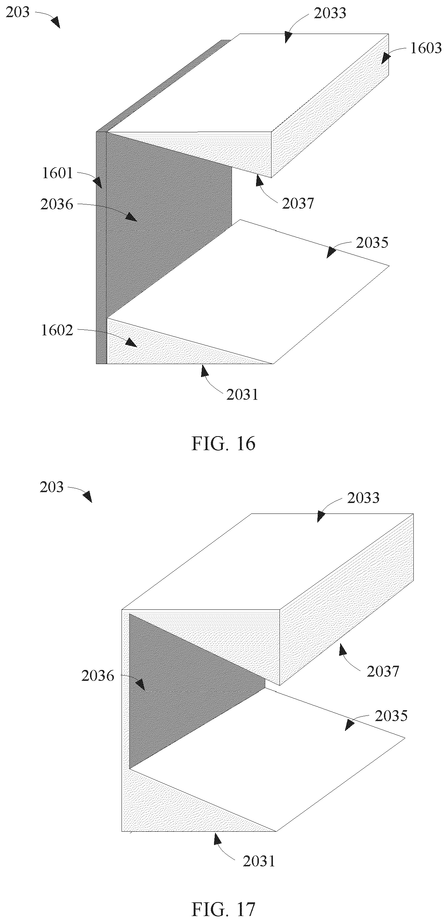

In a possible overall implementation, FIG. 16 is a diagram of a structure of another first light shaping module according to an embodiment of this application. The first light shaping module includes a flat 1601, a first refractive body 1602, and a second refractive body 1603. The first refractive body 1602 and the second refractive body 1603 are a pair of triangular prisms. A transition layer between the first refractive body 1602 and the second refractive body 1603 is filled with a material with a low refractive index, or the transition layer is air. One side of the flat 1601 is a reflective surface or a refractive surface.

A material of the flat 1601 is not limited herein. For example, the flat 1601 is made of a metal material or a graphite material, and may provide a smooth surface as a reflective surface. For another example, the flat 1601 is made of a material such as ceramic or alloy. In this case, the flat 1601 may be coated with a reflective film, to provide a reflective surface. For another example, the flat 1601 is a transparent crystal or a transparent amorphous body, and reflection or total reflection is generated when a light beam passes through the flat 1601.

Optionally, the flat 1601, the first refractive body 1602, and the second refractive body 1603 may be connected together, for example, are bonded by using glue or fastened by using another connecting piece.

In another possible overall implementation, the first refractive body, the second refractive body, and the reflective surface are formed by processing an integral material. FIG. 17 is a diagram of a structure of another first light shaping module according to an embodiment of this application. The first light shaping module is made of an integral material, and includes an incident surface 2031, a first refractive surface 2035, a first reflective surface 2036 (represented by a dark color), a second refractive surface 2037, and an emergent surface 2033. A material with a low refractive index is filled between the first refractive surface 2035 and the second refractive body 1603, or a middle area is an air gap.

Optionally, the first reflective surface 2036 is a refractive surface, and reflection or total reflection is generated when the light beam passes through the first reflective surface 2036. Alternatively, optionally, the first reflective surface 2036 is implemented by coating a reflective film.

This is not limited to the foregoing design. In another possible design, the first emitting module and the second emitting module are located on a focal plane of the lens. Alternatively, further, the second emitting module includes an out-light surface, and the out-light surface of the second emitting module is located on a focal plane of the lens.

The emitting module is disposed on the focal plane, and a light beam emitted by the emitting module has a good collimation degree when passing through the lens, so that a longest detection range of the detection apparatus can be increased, and a long-range detection capability can be ensured.

This is not limited to the foregoing design. In another possible design, there is defocusing between the focal plane of the lens and each of the first emitting module and the second emitting module.

For example, there is defocusing between the focal plane of the lens and an out-light surface of the first emitting module and an out-light surface of the second emitting module.

In the foregoing implementation, the first emitting module is defocused, so that a dispersion effect of the light beam emitted by the first emitting module can be improved, a visual field range is expanded, and a blind spot is narrowed.

This is not limited to the foregoing design. In another possible design, the second emitting module is closer to the lens than the focal plane. In other words, a distance between the first emitting module and the lens is less than a focal length. The emitting apparatus may further include a second light shaping module, and the second light shaping module is configured to converge a light beam emitted by the second emitting module. In this case, a convergence effect of the second light shaping module may compensate for defocusing of the second emitting module.

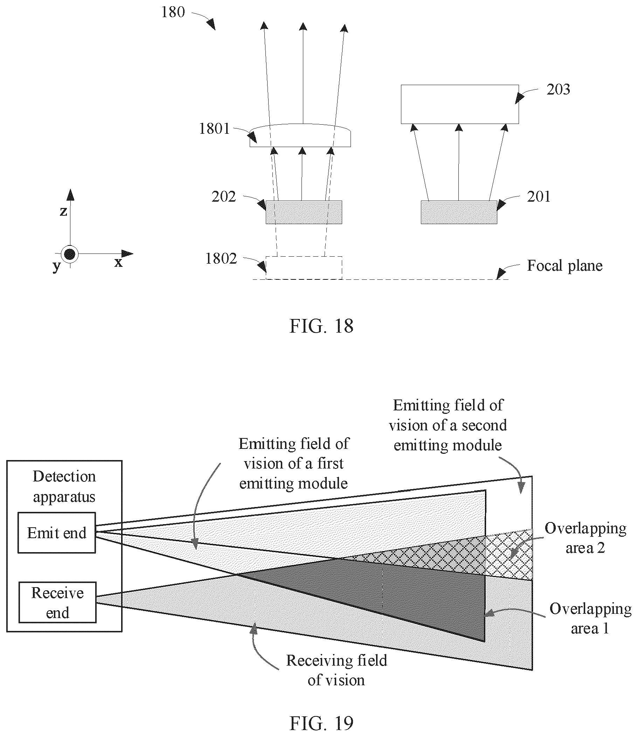

FIG. 18 is a diagram of a structure of another emitting apparatus according to an embodiment of this application. An emitting apparatus 180 further includes a second light shaping module 1801, and the second light shaping module 1801 is located between a second emitting module 202 and a lens. The second light shaping module 1801 is configured to process a second light beam to obtain a second shaped light beam. A divergence angle of the second shaped light beam is less than a divergence angle of the second light beam.

The second light shaping module is used to converge the second light beam, to ensure a collimation degree of a light beam emitted by the second emitting module, and improve a long-range detection capability. In a possible example, the second shaped light beam may be considered as being emitted by an equivalent light source 1802. The equivalent light source 1802 is closer to a focal plane than the second emitting module 202. Therefore, the second light shaping module 1801 can improve a collimation degree existing after a light beam emitted by the second emitting module 202 passes through the lens.

In another possible implementation, a distance between the second emitting module and the lens is greater than a focal length. The emitting apparatus may further include a second light shaping module, and the second light shaping module is configured to diverge a light beam emitted by the second emitting module. In this case, a divergence effect of the second light shaping module may compensate for defocusing of the second emitting module.

This is not limited to the foregoing design. In another possible design, the first emitting module and the second emitting module are configured to emit light beams in a time division manner, and the first light beam and the second light beam have different transmission time. In such a setting, transmission time of the first light beam and transmission time of the second light beam are alternate, so that it is difficult to form mutual interference when targets in different visual fields are detected by using the first light beam and the second light beam.

FIG. 19 is a diagram of a possible detection range according to an embodiment of this application. It can be learned that an overlapping area between an emitting field of vision of the first emitting module and a receiving field of vision is an overlapping area 1, and an overlapping area between an emitting field of vision of the second emitting module and the receiving field of vision is an overlapping area 2. The overlapping area 1 and the overlapping area 2 overlap. When the first emitting module and the second emitting module perform detection in a time division manner, the overlapping area 1 and the overlapping area 2 are isolated in a time division manner, to reduce interference, and improve an effective proportion of signals received by a detection apparatus.

Optionally, when the first light beam and the second light beam are respectively applicable to short-range detection and long-range detection, detection for blind spot compensation in a near-visual field range is further implemented without affecting a long-range detection capability, and detection performance of the detection apparatus is enhanced.

In an example of time-division light emission, the first emitting module is configured to emit the first light beam in a first time period, the second emitting module is configured to emit the second light beam in a second time period, and the first time period and the second time period do not overlap.

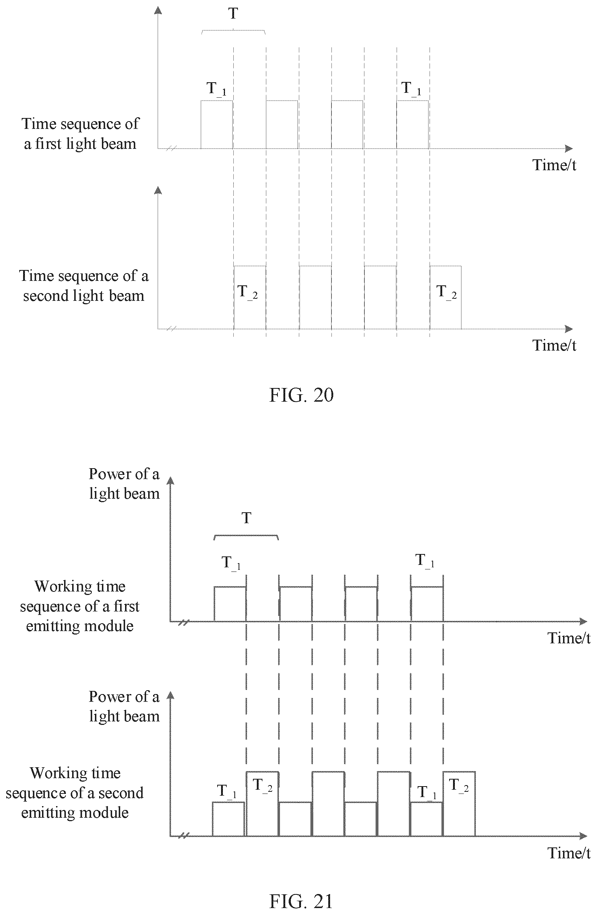

FIG. 20 is a diagram of a light emitting time sequence according to an embodiment of this application. As shown in FIG. 20, in a detection cycle T, the first light beam is emitted in a time period T_{_1} in the cycle, and a second light beam is emitted in a time period T_{_2} in the cycle. The time period T_{_1} and the time period T_{_2} do not overlap. Certainly, the light emitting time sequence shown in FIG. 20 is described by using a periodic light emitting time sequence as an example. This application is also applicable to aperiodic light emitting or periodic light emitting with another duration rule. For example, duration of the time period T_1 may be different from duration of the time period T_2. For example, the duration of the time period T_1 may be greater than the duration of the time period T_2, or the duration of the time period T_1 may be less than the duration of the time period T_2. For example, after a plurality of time periods T_1 and a plurality of time periods T_2, the first emitting module and the second emitting module may pause for a period of time, and then start to emit light again.

It should be noted that a vertical coordinate in FIG. 20 is an example indicating whether there is a light beam at specific time, and a variable is not strictly limited. For example, the variable indicated by the vertical coordinate may indicate whether an emitting module is powered on, a level of the emitting module, or a power of signal light emitted by the emitting module.

In a possible implementation, in the second time period, the second emitting module may emit a fifth light beam, and a longest detection range of the fifth light beam is different from a longest detection range of the second light beam.

For example, when a longest detection range of the first light beam is less than the longest detection range of the second light beam, the longest detection range of the fifth light beam is less than the longest detection range of the second light beam. In such a setting, the fifth light beam is applicable to short-range detection in the first time period. In this way, short-range detection can be performed in a larger range in the first time period, to further improve a short-range detection capability of the detection apparatus. Optionally, a range detection capability of the fifth light beam is equal to a range detection capability of the first light beam.

FIG. 21 is a diagram of another light emitting time sequence according to an embodiment of this application. As shown in FIG. 21, in a detection cycle T, the first emitting module emits the first light beam in a time period T_{_1} in the cycle, the second emitting module emits the fifth light beam in a time period T_{_1} in the cycle, and the second emitting module emits the second light beam in a time period T_{_2} in the cycle. A longest detection range of the first light beam is less than a longest detection range of the second light beam, and a longest detection range of the fifth light beam is also less than a longest detection range of the second light beam. Therefore, in the time period T_{_1}, light beams emitted by the first emitting module and the second emitting module may be considered as light beams used for short-range detection; and in the time period T_{_2}, light beams emitted by the second emitting module may be considered as light beams used for long-range detection. In such a setting, time of long-range detection and time of short-range detection are isolated, and short-range detection in a larger range is further implemented. This further improves detection efficiency, improves the short-range detection capability of the detection apparatus, and enhances detection performance.

It should be noted that a vertical coordinate "power" in FIG. 21 is an example for indicating a longest detection range of a light beam in a time period. The power may alternatively be a current of an emitting module, energy density of a light beam, a longest detection range of the light beam, or the like.

The foregoing describes some possible designs in embodiments of this application. In a specific implementation process, the foregoing plurality of designs may be further combined. The following describes, by using an example, an embodiment obtained by combining some designs. It should be understood that, for modules and logic that are not explained in the following embodiments, refer to descriptions in the foregoing design. In addition, the following plurality of embodiments may be combined.

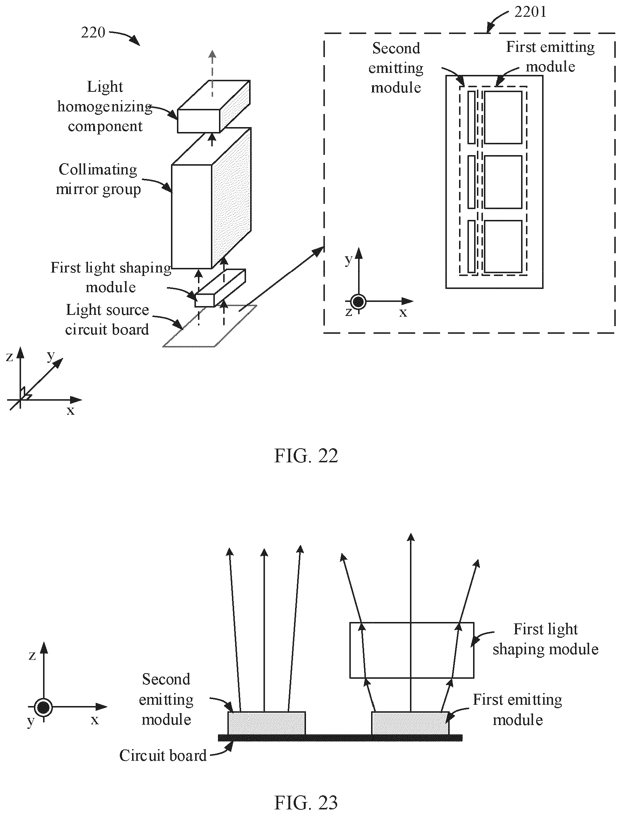

FIG. 22 is a diagram of a structure of another possible emitting apparatus according to an embodiment of this application. An emitting apparatus 220 includes a circuit board (or referred to as a light source circuit board), a first light shaping module, and a collimating lens group, and optionally includes a light uniforming component, a reflective mirror, or the like. The light uniforming component includes but is not limited to a microlens array, a light uniforming panel, a light uniforming sheet, a diffusion plate, or the like.

The first emitting module and the second emitting module are disposed on the circuit board. A distribution of the first emitting module and the second emitting module on an x-y plane is shown in an area 2201. The first emitting module and the second emitting module share a collimating lens group, to reduce an overall volume of the emitting apparatus, and improve integration.

The first emitting module and the second emitting module each include a plurality of lasers, and the lasers are represented by using rectangular boxes. For example, the lasers included in the first emitting module and the second emitting module are VCSELs, and a light emitting direction is a direction away from the circuit board.

Optionally, the first emitting module and the second emitting module are disposed in parallel. In an x direction, there is a gap between the first emitting module and the second emitting module.

Further, optionally, there is a gap between a plurality of lasers included in the first emitting module in a y direction. There is a gap between a plurality of lasers included in the second emitting module in the y direction. Herein, an example in which the gap between the lasers in the first emitting module is the same as the gap between the lasers in the second emitting module is used for description. In a specific implementation process, gaps between the lasers may be different.

In the emitting apparatus 230, the first light shaping module is configured to shape a light beam (namely, the first light beam) from the first emitting module, to expand an FOV corresponding to the light beam emitted by the first emitting module.

FIG. 23 is a diagram of an emitting optical path of another possible emitting apparatus according to an embodiment of this application. The first light shaping module is an optical flat. Because the optical flat M has a specific thickness, an optical path length of a second light beam is changed. It is equivalent to that there is defocusing between the first emitting module and a focal plane of the collimating lens group. Defocusing makes the second light beam diffused, to reduce a gap between the second shaped light beam and the first light beam in angular space.

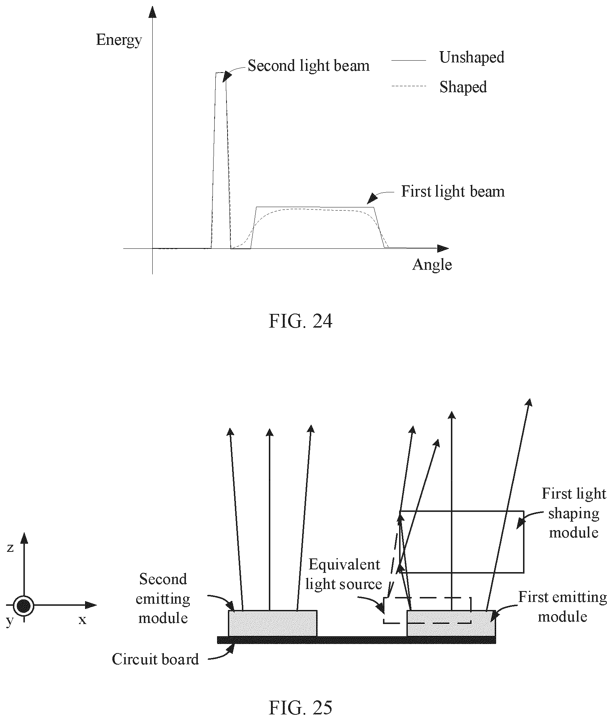

FIG. 24 is a diagram of a light beam energy distribution in angular space according to an embodiment of this application. A solid line represents a case in which the first light shaping module is not disposed, and a dashed line represents a case in which the first light shaping module is disposed. The second light beam is diffused after being processed by the first light shaping module, so that the light beam is diffused to an outside, to expand an FOV corresponding to the second light beam, narrow a visual blind spot, and improve continuity of a visual field.

FIG. 25 is a diagram of an emitting optical path of another possible emitting apparatus according to an embodiment of this application. The first light shaping module is an optical flat. A partial light beam in the second light beam is reflected on a side wall that is of the optical flat and that is close to the second emitting module, so that a distance between an equivalent light source and the collimating lens group changes (for example, defocusing is formed), and the equivalent light source is closer to the second emitting module than the first emitting module. In such a setting, the first light beam and the second light beam can have a smaller angular gap after passing through a lens, to reduce a visual blind spot, and improve continuity of a visual field.

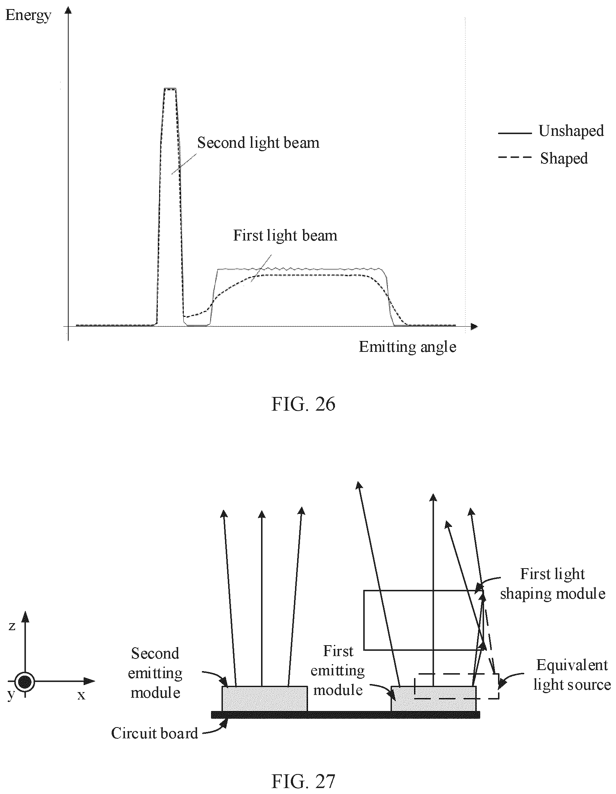

FIG. 26 is a diagram of a light beam energy distribution in angular space according to an embodiment of this application. A solid line represents a case in which the first light shaping module is not disposed, and a dashed line represents a case in which the first light shaping module is disposed. After processing is performed by the first light shaping module, an equivalent gap between the first light beam and the second light beam is reduced, and after collimation is performed by the collimating lens group, a gap between emergent light beams in angular space is reduced or even eliminated.

FIG. 27 is a diagram of an emitting optical path of another possible emitting apparatus according to an embodiment of this application. The first light shaping module is an optical flat. A partial light beam in the second light beam is reflected on a side wall that is of the optical flat and that is away from the second emitting module, so that a distance between an equivalent light source and the collimating lens group changes (for example, defocusing is formed), and an edge of the equivalent light source is extended in a direction away from the second emitting module. In other words, a light source virtual image corresponding to the first shaped light beam is further expanded in a positive direction of x, to expand an equivalent light emitting surface of the first light beam, so that the first emitting module has a larger FOV, and detection efficiency is improved.

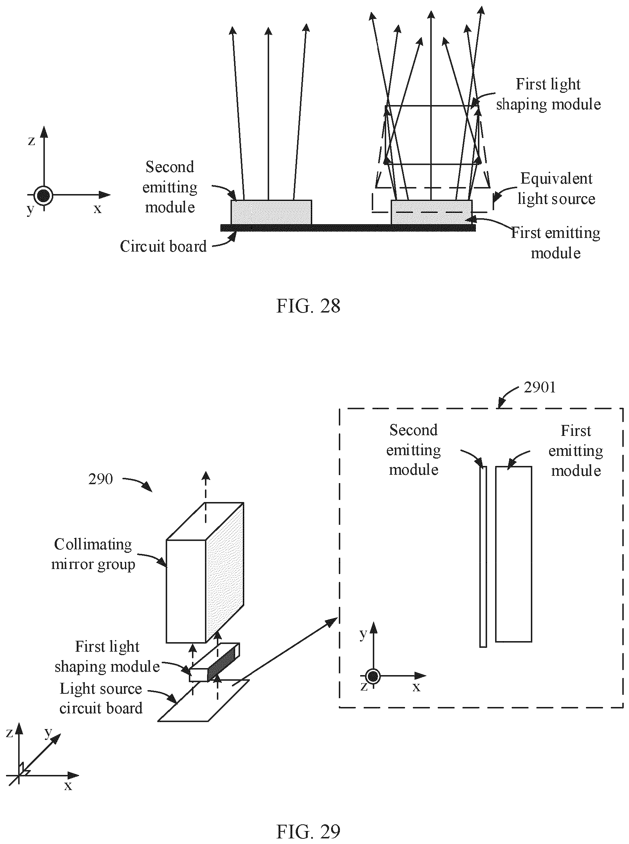

FIG. 28 is a diagram of an emitting optical path of another possible emitting apparatus according to an embodiment of this application. The first light shaping module is an optical flat. A partial light beam in the second light beam is reflected on side walls on two sides of the optical flat, and the side walls on the two sides are a side wall close to the first emitting module and a side wall away from the second emitting module. The first shaped light beam is obtained through transmission. A distance between the equivalent light source corresponding to the first shaped light beam and the collimating lens group changes (for example, defocusing is formed), and an edge of the equivalent light source is extended away from a surrounding, to expand an equivalent light emitting surface of the first light beam, so that the first emitting module has a larger FOV, and detection efficiency is improved.

In a possible implementation, in a cycle T, the first emitting module emits the first light beam in T1, the second emitting module emits the fifth light beam in T1, and the second emitting module emits the second light beam in T2. The first light beam and the fifth light beam are used for short-range detection, and the second light beam is used for long-range detection. Such a light emitting manner can expand a visual field of short-range detection, improve detection efficiency, and enhance detection performance.

Optionally, in the foregoing implementation, a cross section of the first light shaping module is a polygon. Therefore, the side wall away from the first emitting module and the side wall close to the second emitting module are used as an example for description. In some scenarios, the optical flat may be a cylinder. In this case, the side wall away from the first emitting module and the side wall close to the second emitting module may be a same side wall (for example, a side wall of the cylinder). For another example, in some scenarios, a cross section of the optical flat may be a hexagon, an octagon, or the like. In this case, the side wall away from the second emitting module and the side wall close to the second emitting module each may be a plurality of side walls.

It should be understood that the embodiment shown in FIG. 22 may be further combined with one or more of the foregoing designs, or may be combined with one or more of the following embodiments. Combination cases are not described in detail one by one in this application.

FIG. 29 is a diagram of a structure of another possible emitting apparatus according to an embodiment of this application. An emitting apparatus 290 includes a circuit board (or referred to as a light source circuit board), a first light shaping module, and a collimating lens group, and optionally includes a light uniforming component, a reflective mirror, or the like. Optionally, the light uniforming component is implemented by using a microlens array.

A first emitting module and a second emitting module are disposed on the circuit board. A distribution of the first emitting module and the second emitting module on an x-y plane is shown in an area 2901. The first emitting module and the second emitting module share a collimating lens group, to reduce an overall volume of the emitting apparatus, and improve integration.

The first emitting module and the second emitting module are disposed in parallel, and each include one long-strip laser, and the laser is represented by using a rectangular box. For example, the laser is a VCSEL, and a light emitting direction is a direction away from the circuit board. In an x direction, there is a gap between the first emitting module and the second emitting module.

In the emitting apparatus 290, the first light shaping module is configured to shape a light beam (namely, a first light beam) from the first emitting module, to expand an FOV corresponding to the light beam emitted by the first emitting module. An upper surface and a lower surface of the first light shaping module are parallel planes, and a side wall is a plane and is coated with a reflective film. The first light beam is incident from the lower surface of the first light shaping module, a partial light beam is reflected by the side wall and arrives at the upper surface, and a partial light beam is directly propagated to the upper surface without being reflected by the side wall; and a light beam emitted from the upper surface of the first light shaping module is a shaped first light beam, which is referred to as a first shaped light beam for ease of distinguishing.

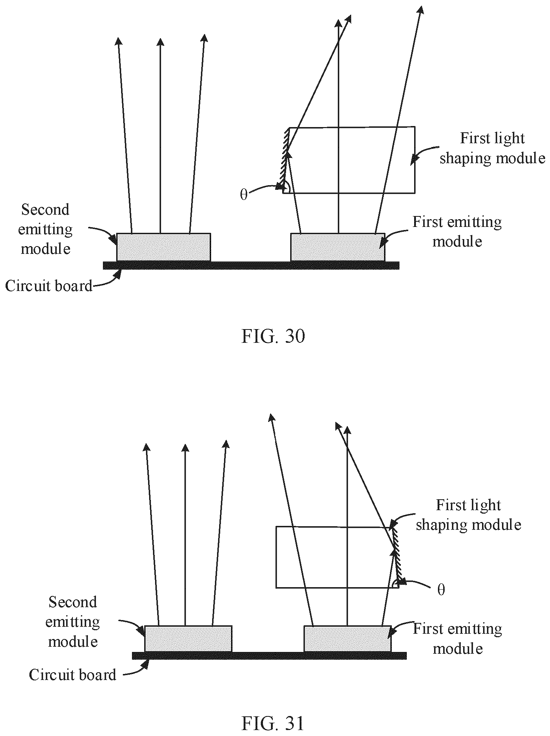

FIG. 30 is a diagram of an emitting optical path of another possible emitting apparatus according to an embodiment of this application. An angle θ (θ<90°) exists between the side wall (close to the second emitting module) and the lower surface of the first light shaping module, to increase energy of a light beam reflected by the side wall, and increase an incident angle of the reflected light beam. This not only changes a distance between an equivalent light source of the second shaped light beam and a lens (for example, implements defocusing of the equivalent light source), but also increases energy of a deflected optical signal, to reduce a gap between the second shaped light beam and the first light beam in angular space. An energy distribution, in the angular space, of a light beam emitted by the emitting apparatus shown in FIG. 30 is similar to that in FIG. 26. After being processed by the first light shaping module, the second light beam is diffused, so that the light beam is diffused to an outside, and a gap between the first light beam and the second light beam is reduced, and after being collimated by a collimating lens group, a gap between emergent light beams in the angular space is reduced or even eliminated.

FIG. 31 is a diagram of an emitting optical path of another possible emitting apparatus according to an embodiment of this application. A side wall that is of the first light shaping module and that is away from the second emitting module is coated with a reflective film, and an angle θ (θ<90°) exists between the side wall and the lower surface of the first light shaping module. A partial light beam in the first light beam is reflected by the side wall that is of the first light shaping module and that is away from the second emitting module, so that a distance between an equivalent light source corresponding to the second shaped light beam and the collimating lens group changes (for example, defocusing is formed), and an edge of the equivalent light source is extended in a direction away from the second emitting module. In other words, a light source virtual image corresponding to the first shaped light beam is further expanded in a positive direction of x, to expand an equivalent light emitting surface of the first light beam, so that the first emitting module has a larger FOV, and detection efficiency is improved.

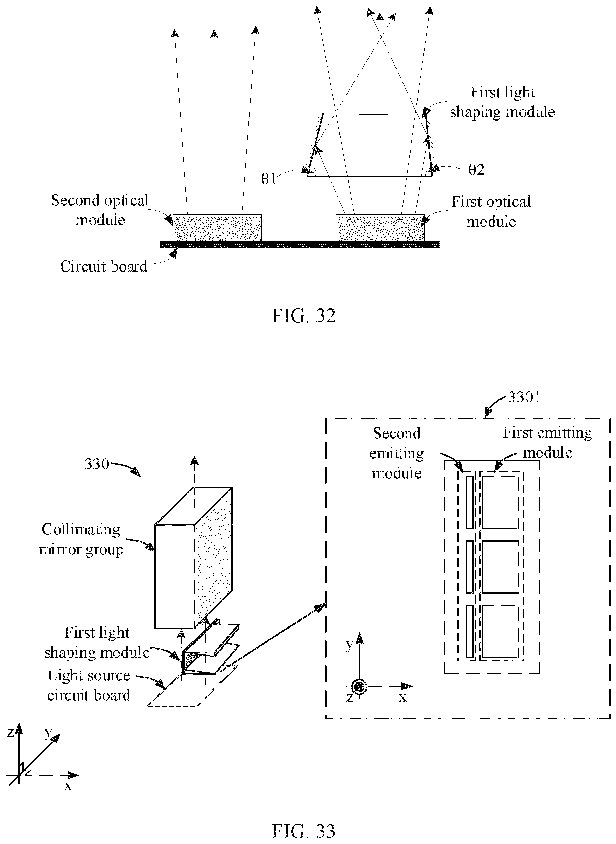

FIG. 32 is a diagram of an emitting optical path of another possible emitting apparatus according to an embodiment of this application. Side walls on two sides of the first light shaping module are coated with a reflective film, and angles θ1 and θ2 exist between the lower surface of the first light shaping module and each of the side walls on the two sides. Herein, θ1<90°, and θ2<90°. Optionally, θ1=θ2.

The partial light beam in the first light beam is reflected by a side wall (for example, including a side wall close to the first emitting module and a side wall away from the second emitting module) of the first light shaping module, and is emitted to obtain the first shaped light beam. A distance between the equivalent light source corresponding to the first shaped light beam and the collimating lens group changes (for example, defocusing is formed), and an edge of the equivalent light source is extended away from a surrounding, to expand an equivalent light emitting surface of the first light beam, so that the first emitting module has a larger FOV, and detection efficiency is improved.

In a possible implementation, in a cycle T, the first emitting module emits the first light beam in T1, the second emitting module emits the fifth light beam in T1, and the second emitting module emits the second light beam in T2. The first light beam and the fifth light beam are used for short-range detection, and the second light beam is used for long-range detection. Such a light emitting manner can expand a visual field of short-range detection, improve detection efficiency, and enhance detection performance.

Optionally, in the foregoing implementation, a cross section of the first light shaping module is a polygon. Therefore, the side wall away from the first emitting module and the side wall close to the second emitting module are used as an example for description. In some scenarios, the optical flat may be a cylinder. In this case, the side wall away from the first emitting module and the side wall close to the second emitting module may be a same side wall (for example, a side wall of the cylinder). For another example, in some scenarios, a cross section of the optical flat may be a hexagon, an octagon, or the like. In this case, the side wall away from the second emitting module and the side wall close to the second emitting module each may be a plurality of side walls.

It should be understood that the embodiment shown in FIG. 29 may be further combined with one or more of the foregoing designs, or may be combined with one or more of the foregoing or following embodiments. Combination cases are not described in detail one by one in this application.

FIG. 33 is a diagram of a structure of another possible emitting apparatus according to an embodiment of this application. An emitting apparatus 330 includes a circuit board (or referred to as a light source circuit board), a first light shaping module, and a collimating lens group, and optionally includes a light uniforming component, a reflective mirror, or the like. Optionally, the light uniforming component is implemented by using a microlens array.

A first emitting module and a second emitting module are disposed on the circuit board. A distribution of the first emitting module and the second emitting module on an x-y plane is shown in an area 3301. The first emitting module and the second emitting module share a collimating lens group, to reduce an overall volume of the emitting apparatus, and improve integration.

The first emitting module and the second emitting module each include a plurality of lasers, and the lasers are represented by using rectangular boxes. For example, the lasers included in the first emitting module and the second emitting module are VCSELs, and a light emitting direction is a direction away from the circuit board.

Optionally, the first emitting module and the second emitting module are disposed in parallel. In an x direction, there is a gap between the first emitting module and the second emitting module.

Further, optionally, there is a gap between a plurality of lasers included in the first emitting module in a y direction. There is a gap between a plurality of lasers included in the second emitting module in the y direction. Herein, an example in which the gap between the lasers in the first emitting module is the same as the gap between the lasers in the second emitting module is used for description. In a specific implementation process, gaps between the lasers may be different.

In the emitting apparatus 330, the first light shaping module is configured to shape a light beam (namely, a first light beam) from the first emitting module, to expand an FOV corresponding to the light beam emitted by the first emitting module. A pair of triangular prisms are included at upper and lower ends of the first light shaping module, a middle area is a transition layer, the transition layer is filled with a low material or the transition layer is an air gap, and a refractive index of the transition layer is less than a refractive index of the triangular prism; and a side wall of the first light shaping module is coated with a reflective film. When the first light beam is shaped, the first light beam is incident from a lower surface of a triangular prism at the lower end, and is emitted through the triangular prism at the lower end, and a partial light beam is reflected by the side wall; and a light beam passing through the triangular prism at the lower end is incident on a lower surface of a triangular prism at the upper end through the side wall and/or the transition layer, and is emitted from the upper surface of the triangular prism at the upper end, to obtain the first shaped light beam.

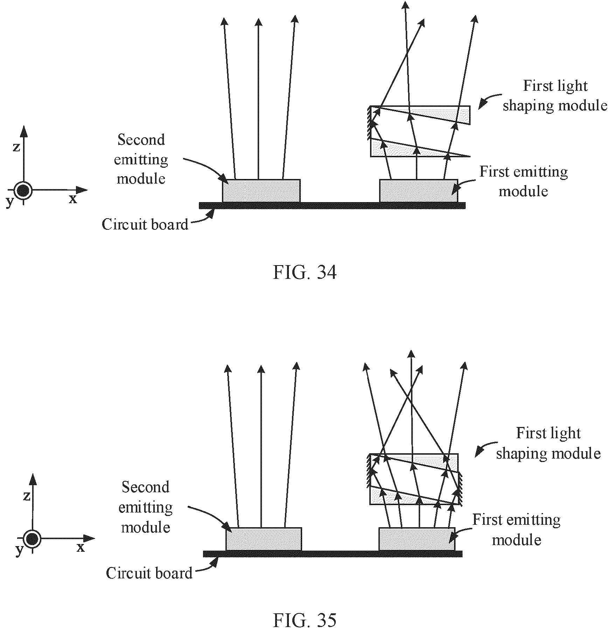

In a possible example, a side wall that is of the first light shaping module and that is close to the second emitting module is coated with a reflective film. FIG. 34 is a diagram of an emitting optical path of another possible emitting apparatus according to an embodiment of this application. The side wall that is of the first light shaping module and that is close to the second emitting module is coated with the reflective film. When the first light beam passes through the first light shaping module, a partial light beam is deflected by the side wall close to the second emitting module, and an FOV corresponding to the first light beam may be increased. An intersection point of a reverse extension line of a path of a reflected light beam and a focal plane of a collimating lens group is close to a long-range detection light source. Therefore, an equivalent light source corresponding to the reflected light beam is translated toward the second emitting module. Equivalently, a "gap" between a light beam emitted by the first emitting module and a light beam emitted by the second emitting module is reduced. After being collimated by the collimating lens group, a gap between emergent light beams in angular space is reduced or even eliminated. In addition, through a refraction effect of the triangular prism, more light beams are deflected to an outside, so that energy of light beams at an edge part is more concentrated, energy of a reflected light beam is enhanced, and more light fills a light source gap. Further, two left-right reversed triangular prisms are used, so that a deflected light beam can be partially returned, to keep an optical path stable and reduce complexity of an optical path design.

In a possible example, a side wall that is of the first light shaping module and that is away from the second emitting module is coated with a reflective film. For related descriptions, refer to the foregoing descriptions.

In another possible example, the side wall that is of the first light shaping module and that is close to the second emitting module and the side wall that is of the first light shaping module and that is away from the second emitting module are coated with reflective films. FIG. 35 is a diagram of an emitting optical path of another possible emitting apparatus according to an embodiment of this application. The partial light beam in the first light beam is reflected by side walls on two sides of the first light shaping module, and is emitted to obtain the first shaped light beam. A distance between the equivalent light source corresponding to the first shaped light beam and the collimating lens group changes (for example, defocusing is formed), and an edge of the equivalent light source is extended away from a surrounding, to expand an equivalent light emitting surface of the first light beam, so that the first emitting module has a larger FOV, and detection efficiency is improved.

In a possible implementation, in a cycle T, the first emitting module emits the first light beam in T1, the second emitting module emits the fifth light beam in T1, and the second emitting module emits the second light beam in T2. The first light beam and the fifth light beam are used for short-range detection, and the second light beam is used for long-range detection. Such a light emitting manner can expand a visual field of short-range detection, improve detection efficiency, and enhance detection performance.

Optionally, in the foregoing implementation, a cross section of the first light shaping module is a polygon. Therefore, the side wall away from the first emitting module and the side wall close to the second emitting module are used as an example for description. In some scenarios, the optical flat may be a cylinder. In this case, the side wall away from the first emitting module and the side wall close to the second emitting module may be a same side wall (for example, a side wall of the cylinder). For another example, in some scenarios, a cross section of the optical flat may be a hexagon, an octagon, or the like. In this case, the side wall away from the second emitting module and the side wall close to the second emitting module each may be a plurality of side walls.

It should be understood that the embodiment shown in FIG. 33 may be further combined with one or more of the foregoing designs, or may be combined with one or more of the foregoing or following embodiments. Combination cases are not described in detail one by one in this application.

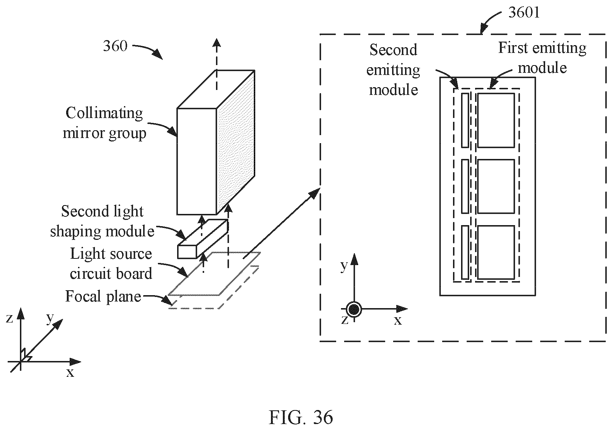

FIG. 36 is a diagram of a structure of another possible emitting apparatus according to an embodiment of this application. The emitting apparatus includes a first emitting module, a second emitting module, a second light shaping module, and a lens, and there is defocusing between a focal plane of the lens and each of the first emitting module and the second emitting module. The first emitting module is configured to emit a first light beam, and the second emitting module is configured to emit a second light beam.

In a possible implementation, the second emitting module is closer to the lens than the focal plane of the lens. In other words, a distance between the first emitting module and the lens is less than a focal length. The second light shaping module is configured to converge the second light beam to obtain a second shaped light beam. The first light beam and the second shaped light beam are emergent through the lens.

As shown in FIG. 18, the second light shaping module is configured to converge the second light beam, to compensate for defocusing of the second emitting module, and improve a collimation degree that is of the second shaped light beam and that is obtained after the second shaped light beam passes through the lens. Because the first emitting module is defocused, the light beam emitted by the first emitting module can be diffused, and an FOV corresponding to the first emitting module can be expanded.

In another possible implementation, the second emitting module is farther away from the lens than the focal plane of the lens. In other words, a distance between the second emitting module and the lens is greater than a focal length. The second light shaping module is configured to diverge the second light beam to obtain a second shaped light beam. The first light beam and the second shaped light beam are emergent through the lens. To be specific, the second light shaping module is configured to diverge the second light beam, to compensate for defocusing of the second emitting module, and improve a collimation degree that is of the second shaped light beam and that is obtained after the second shaped light beam passes through the lens.

It should be understood that the implementation shown in FIG. 36 may be further combined with one or more of the foregoing designs, or may be combined with one or more of the following implementations. Combination cases are not described in detail one by one in this application.

An embodiment of this application further provides a detection apparatus. The detection apparatus includes an emitting apparatus and a detector. The emitting apparatus is the emitting apparatus described in the foregoing embodiments, for example, one or more of the emitting apparatus 20, the emitting apparatus 20, the emitting apparatus 70, the emitting apparatus 90, the emitting apparatus 100, the emitting apparatus 110, the emitting apparatus 130, the emitting apparatus 150, the emitting apparatus 180, the emitting apparatus 220, the emitting apparatus 290, the emitting apparatus 330, or the emitting apparatus 360.

For example, a first emitting module in the emitting apparatus is configured to emit a first light beam, and a second emitting module in the emitting apparatus is configured to emit a second light beam. The detector is configured to receive an echo signal corresponding to the first light beam and an echo signal corresponding to the second light beam.

An embodiment of this application further provides a terminal. The terminal includes the foregoing emitting apparatus and/or the foregoing detection apparatus.

Optionally, the terminal may be an intelligent terminal such as a vehicle, an uncrewed aerial vehicle, or a robot, or a transportation tool.

In the descriptions of this application, orientation or location relationships indicated by the terms "center", "upper", "lower", "vertical", "horizontal", "inside", "outside", and the like are orientation or location relationships based on the accompanying drawings, and are merely intended for ease of describing this application and simplifying description, but does not indicate or imply that an indicated apparatus or element needs to have a specific orientation or needs to be construed and operated in a specific orientation. Therefore, such terms should not be understood as a limitation on this application.

In addition, a Cartesian coordinate system and directions x, y, and z shown in embodiments of this application are example identifiers for ease of understanding, and are not intended to limit embodiments of this application. In a specific implementation process, there may be another design for a placement manner, an arrangement direction, and an orientation of a light beam of the device, and another coordinate system such as a spherical coordinate system may also be used as a coordinate system.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. The expression "at least one of the following items (pieces)" or a similar expression thereof indicates any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects.

In addition, unless otherwise stated, ordinal numbers such as "first" and "second" in embodiments of this application are for distinguishing between multiple objects, but are not intended to limit an order, a time sequence, priorities, or importance of the multiple objects. For example, a first emitting module and a second emitting module are merely for ease of description, and do not indicate different light emitting manners, light emitting sequences, importance degrees, or the like of the first emitting module and the second emitting module.

## Claims

1. An emitting apparatus, wherein the emitting apparatus comprises a first emitting module, a second emitting module, and a first light shaping module, and the first emitting module and the second emitting module are disposed in parallel;
the first emitting module is configured to emit a first light beam, and the second emitting module is configured to emit a second light beam; and
the first light shaping module comprises an incident surface, a side wall, and an emergent surface, the first light beam enters the first light shaping module from the incident surface, a partial light beam in the first light beam is reflected by the side wall, and the first light beam is emitted from the emergent surface to obtain a first shaped light beam.

2. The emitting apparatus according to claim 1, wherein a longest detection range of the first light beam is less than a longest detection range of the second light beam.

3. The emitting apparatus according to claim 1 or 2, wherein the partial light beam comprises a first sub-light beam, and the first sub-light beam is reflected by the side wall that is of the first light shaping module and that is close to the second emitting module.

4. The emitting apparatus according to claim 3, wherein the emitting apparatus further comprises a lens, and the first emitting module and the second emitting module are arranged in a first direction;
the lens is configured to: process the first shaped light beam to obtain a third light beam, and process the second light beam to obtain a fourth light beam; and
in the first direction, an included angle between the first light beam and the second light beam is a first angle, an included angle between the third light beam and the fourth light beam is a second angle, and the second angle is less than the first angle.

5. The emitting apparatus according to any one of claims 1 to 4, wherein the partial light beam comprises a second sub-light beam, and the second sub-light beam is reflected by a side wall that is of the first light shaping module and that is away from the second emitting module.

6. The emitting apparatus according to any one of claims 1 to 5, wherein the partial light beam is fully reflected by a side wall of the first light shaping module; or
a side wall of the first light shaping module is coated with a reflective film, and the partial light beam is reflected by the reflective film.

7. The emitting apparatus according to any one of claims 1 to 6, wherein an included angle between the side wall and the incident surface is an acute angle.

8. The emitting apparatus according to any one of claims 1 to 7, wherein the first light shaping module comprises a first refractive body, a second refractive body, and a first reflective surface;
the first refractive body comprises the incident surface and a first refractive surface, the second refractive body comprises a second refractive surface and the emergent surface, and the first refractive surface and the second refractive surface are spaced apart and are opposite to each other;
the first reflective surface is located on the side wall that is of the light shaping module and that is close to the second emitting module, and the first reflective surface is connected to the first refractive surface and the second refractive surface; and
an included angle between the first reflective surface and the first refractive surface is an obtuse angle.

9. The emitting apparatus according to claim 8, wherein a transition layer exists between the first refractive surface and the second refractive surface, and a refractive index of the transition layer is less than a refractive index of the refractive body.

10. The emitting apparatus according to any one of claims 1 to 9, wherein a distance between the second emitting module and the lens is less than a focal length of the lens; and
the emitting apparatus further comprises a second light shaping module, the second light shaping module is located between the second emitting module and the lens, and the second light shaping module is configured to converge the second light beam to obtain a second shaped light beam.

11. A detection apparatus, wherein the detection apparatus comprises an emitting apparatus and a detector, and the emitting apparatus is the emitting apparatus according to any one of claims 1 to 10;
a first emitting module in the emitting apparatus is configured to emit a first light beam, and a second emitting module in the emitting apparatus is configured to emit a second light beam; and
the detector is configured to receive an echo signal corresponding to the first light beam and an echo signal corresponding to the second light beam.

12. A terminal, wherein the terminal comprises the emitting apparatus according to any one of claims 1 to 11, or the detection apparatus according to claim 11.

13. The terminal according to claim 12, wherein the terminal is a vehicle, an uncrewed aerial vehicle, or a robot.
